# EUROPEAN PATENT APPLICATION

(11) **EP 3 358 096 A1**
(43) Date of publication of application: **08.08.2018**
(21) Application number: 16850428.0
(22) Date of filing: 29.09.2016
(51) Int. Cl.: E04C 2/38, E04C 2/284, B29C 44/12

(54) **METHOD FOR PRODUCING A WALL OR ROOF PANEL HAVING INSTALLATIONS INCLUDED, WALLS OR ROOFS PRE-FABRICATED USING SAID METHOD AND JOINTS BETWEEN THE WALL AND ROOF PANELS**

(30) Priority: 30.09.2015 UY 36338
(71) Applicant: Martínez, Sebastián, Colonia Del Sacramento, Colonia 70000 (UY)
(72) Inventor: Martínez, Sebastián, Colonia Del Sacramento, Colonia 70000 (UY)
(74) Representative: Balder IP Law, S.L.
(86) International application number: PCT/ES2016/070689
(87) International publication number: WO 2017/055669

(57) **Abstract**

This invention refers to multilayered walls totally or partially prefabricated in an industrial plant according to required characteristics and measures, and to its manufacturing method that consists in a delimiting frame with all services included inside, a wire mesh and panels on one or both sides, all pressure-set inside a mould formed by a periphery frame and one or two pressure resistant doors, where polyurethane is injected and expands, bonding all elements and providing a thermo-acoustic insulation layer that adds structural rigidity, being that more options may be added after removing the wall or roof panel from the mould.

## Description

### ANTECEDENTS OF THE INVENTION

There are two main branches in traditional construction, which are light construction developed with a base on wood or metal structures and panels which cover said structure, and the heavy construction based on piling and bonding with cement, stone or clay blocks, including of course bricks.

With the development of new materials and processes, and with the increase in hand labour's cost, both construction types have had great innovations in the last years. With the goal of reducing construction costs and attaining better finish, new methods for the construction have been developed, where walls and roofs are manufactured in industrial plants off the constructions site, and then transported and assembled on site.

It is in this sense where light construction has developed a greater number of alternatives, since by being lighter, it is easier to build bigger structures which are relatively easy to move and assemble without the need of very heavy equipment.

There are methods for the construction of prefabricated structures based on concrete and blocks of various types, but they require high investments for the installation of a manufacturing plant as well as for heavy and very heavy equipment for its transportation and set-up.

From the point of view of the final client (that is who buys a house or building), we could classify said customers according to two types: those who do not feel some kind of rejection towards lightweight construction, and those who prefer robust structures for their homes and are reluctant to use construction methods and products with walls that do not transmit the sensation of having the rigidity and robustness of brick and mortar (or concrete) structures.

The mentality of these consumers is strongly bound to cultural and social aspects. In this sense, there is a **perceived need** in the market, which consists in the supply or invention of a method for light, prefabricated and custom made constructions, meaning by this whole walls (part or all the width or the length of a house or building) which may be tailor made in a manufacturing plant. This is an important distinction: we don't mean mass produced standard kit houses, but walls and roofs for houses according to a specific design provided usually by the consumer or his architect.

Thus, our wall and roof panels may be assembled on site without the need of previous structures, except for the floor platform. Nonetheless, to the sight and tact, the walls and roofs thus manufactured will feel and look as if they were of the heavy construction type, meaning by this a cement, bricks, stones, etc. finish on the exterior side (not exclusively) and a rigid and solid material on the interior part (not exclusively).

The continuous apparition in the news of houses that have been utterly destroyed and converted by hurricanes into not much more than matchsticks is a strong incentive **not** to buy light construction houses, especially in countries where there is a "brick culture", not to mention strong winds. Overcoming this tendency and fear (sometimes justified) is yet another of the goals of the invention herewith described.

The purpose of this invention is the design of a product that may adjust to a building system that will satisfy the abovementioned needs, that's to say a type of walls and roofs that may be custom made to specific measures of design and with the openings and services installations as required by the customer (places and sizes for doors and windows, thickness of electrical wires, diameter of pipes, size of ducts, etc.).

In this sense, we must have in the house or building or our invention a light wall with a solid and rigid nucleus which will bear a great proportion of the weight, with exterior and interior finishes similar to traditional brick and mortar houses both to the eye and tact.

Furthermore, it may have structural beams inside the prefabricated wall, that's to say it will be a one piece self-supporting structure that avoids the need for on-site manufacturing and/or assembling the walls themselves. This will at the same time greatly ease the transportation to the building site, and lower its costs.

At the same time, the walls and roofs, having been totally manufactured in an industrial plant, and counting with a solid and rigid nucleus which is at the same time light, will be easily manipulated on site, thus attaining the assembly of the construction in a short time as compared to traditional construction and even as compared to other light construction systems.

Furthermore, this assembly speed is of cardinal importance when we compare the assembly labor cost with the labor cost of a traditional construction, which is currently 70% of the total cost in some countries and not much less in the rest. This makes housing costs unbearably high for a considerable part of the population.

### DESCRIPTION OF THE INVENTION

This building system is based upon the construction of whole walls in a manufacturing plant and their on-site assembling without the need of any previous structure (except for the floor platform), given that the rigidity providing beams are included in the wall, as well as the openings.

The wall is formed by a rigid nucleus that is contained in the frame which limits its contour, and by internal frames for the assembly of doors and windows. Adhered to the rigid nucleus, there are two layers which comprise the internal and external finish. All service conduits are contained inside the rigid nucleus.

The finish layers may be provided either by the fixation of panels to the nucleus or to the frame or by applying a layer of cement in order to attain a finish similar to traditional construction, both to view and to tact. This finish may also be obtained by the manufacturing plant in-mould assembly with a cementitious panel.

The services are situated inside the wall's rigid nucleus: electricity, sanitary, heating, TV, and any other required piping of cabling, as well as the pertinent structural beams. Once the wall is finished at the manufacturing plant, it is transported to the construction site where it is anchored to the ground (concrete platform) and assembled with the other walls and roof.

When the walls are ready and assembled, roofing is assembled. When the house's structure is ready, final on site finish -if required- is applied, as for example the necessary water proofing or painting.

During the roof panels off site manufacture, and as part of the outer layer, water collectors may be inserted in same, so as to convert the roof in a big solar heater.

As described above, a first aspect of the current invention refers to:
1) A method for manufacturing walls characterized in that they are plant (off site) manufactured according to specific measures and instructions provided by the customer, with a an optional reticular structure, internal beams and door and window frames, with services included as required, all of it put together inside a peripheral frame which is put inside a mould that withstands considerable pressures and inside which polyurethane or other similar products are injected and expand to form an internal load bearing and heat and sound insulation nucleus that contains all pertinent services: electric wires, air conditioning, water, sanitary, ducts as required, and also a mesh that can be of metal wire, synthetic fiber, natural fiber or other material, all joined together to the polyurethane or to the external frame that limits or contains the wall, said mesh fixed by means of a layer of poliurea or by staples, screws, bolts, or other mechanical implement that hold together the mesh either to the polyurethane or to the wall's external frame, which can be made of wood, Aluminum, ferric/ferrous metals or other mechanically resistant materials, where on that mesh, supported as above, an exterior or interior cover may be projected by air gun or spray gun, said cover being of cement, gypsum or any other material projectable by means of an air gun. Also, custom made panels may be applied on the exterior and/or interior surface, being they (not exclusively) of cement or cementitious materials, gypsum, tiles, glazed tiles, ceramics, various resins, ground stone held together by resins or similar materials, cellulose, MDF, OSB, wood, plywood, clay roof tiles, various sized bricks, and where both the covering materials or the panels, if they are not air gunned on the exterior of the manufacturing mould, may be assembled inside the mould, from where a multilayered wall comes out perfectly finished, and where inside said nucleus is injected through various strategically made orifices which perforate both the mould lid and one of the panels inside same, so that the polyurethane or similar, setting inside the mould and forming a mechanically resistant body, supplies at the same time thermal insulation and bonding strength among the different layers and internal elements. Besides, in the case of bricks or similar instead of one or both panels, same are assembled first on the mould's bottom, and where the same polyurethane or similar material, on expanding at considerable pressure expands and filters between the bricks or similar and bonds them together and to the rest of the multilayered wall without needing any further application of cement or any other bonding material, so that the wall comes out of the mould finished and with its layers and panels (internal and external) . If instead of panels, ceramics or bricks are used, the wall comes out equally water proofed in an almost perfect way, with its joints perfectly bonded with either polyurethane or poliurea or similar, being that such joints additionally provide structural strength, thus forming a light wall that on sight and tact is indistinguishable from a traditionally built wall, but having a cost, and demanding a construction time largely shorter, with significant structural strength and the services included inside, thermal and acoustic insulation, and capable of accepting and infinite variety of internal and external layers, be them applied inside or outside the mould where the polyurethane is injected.

**According to other characteristics of the invention, we have:**
2) The walls may be custom made according to the particular necessities and on plant (off site) facilities, with internal beams and frames (as for windows and doors) inside same, all encompassed inside a peripheral frame which is put inside a mould that resists considerable pressure, and inside which the polyurethane or similar substance is injected and expands, and which is also characterized by forming a nucleus having mechanical resistance and providing at the same time thermal and acoustic insulation, where the mechanical resistance (not only load bearing) of the insulating material goes in addition to the one provided by the wall's other components, and containing inside the room defined by the frame which is put inside the mould all the services of electricity, air conditioning, water, sanitary in general, ducts and other as required.
3) The mesh, either metallic, synthetic, fiber made or from other material, besides being able to be installed with staples, screws, bolts, etc. to the wall's frame, and/or bonded with poliurea or similar material to the polyurethane or similar material nucleus, may also be just one mesh on the interior side, or one on the exterior side, or two, one on either side.
   By interior side is meant the face looking towards the building's interior, by exterior side the one exposed to the elements.
4) The internal and or external meshes as the internal and external panels may be applied to the wall after same has been taken out of the mould.
5) The exterior and/or interior layer may be formed by bricks of diverse designs, stones or others, as standard bricks and blocks, which have been applied inside or outside the mould, being it that when they are applied inside the very same polyurethane expansion pressure makes same filter in between the bricks, stones or otherwise, and bonds them together and to the rest of the wall (this is to say to the polyurethane or similar material and to the frames), thus producing a multilayered wall with thermal and acoustic insulation which provides additional structural rigidity to the multilayered wall, where one of those layers, or two if desired to make it on the interior and the exterior side, is a standard brick or block wall but with a multilayered wall bonded either to its inside or to its outside, placed in between in case bricks or blocks are decided on the inside and outside, being that brick and multilayered wall are built jointly and thus very well bonded, providing a prefabricated structure which is the conjunction of the traditional structure and a light modern structure with a thermo/acoustic layer, containing in its depth all the pertinent services: electric, sanitary, ventilation, heating, etc., all of them installed as and where required by the customer.
6) Another aspect of this invention refers to a wall manufactured essentially as described above, but that shall be used for roofing, where the manufacturing mould's bottom -that's to say the roof's exterior side- a layer of roof tiles of any design and material has been laid.
7) Another aspect of the invention refers to a roofing section where in the manufacturing mould's bottom (which will be the exterior part) a panel or impermeable material may be used, resistant to ultra violet rays so as to avoid its degradation by solar rays, and where the impermeable union or joint between two adjacent sections may be made of poliurea or similar material, being such bond also specified as to withstand solar rays , and adding said poliurea or similar additionally provides structural strength to the roof by rigidly bonding different sections.
8) In the manufacturing mould's bottom (which will be the exterior side of the roof) a solar heating panel may be assembled or laid down as if it were the exterior impermeable panel, being same connected to tubes included inside the frame that will be filled with the polyurethane or similar material.
9) An internal frame may be inserted in the mould such as to form a window, but in this case -a roof module- it will be in order to let a specific custom made duct pass through, be it for ventilation, heating/refrigeration, o a chimney, or any other duct that may be useful, where the junction between said duct and the adjacent panels will be water proofed by poliurea or similar resin, being this resin specially prepared so as to withstand ultraviolet solar rays, said inserted internal frame will be attached to the wall's external frame or to its reinforcing beams.
10) The prefabricated wall, when having all its layers, may be formed, from the outside or exterior side towards the inside side or face, in the following way:
   a) exterior panel
   b) exterior fastening mesh
   c) polyurethane or similar nucleus inside a peripheral frame and with interior frames for windows, doors, etc. and with the services installations included inside the polyurethane or similar nucleus
   d) interior fastening mesh
   e) interior panel
   where the minimum manufactured in the production plant is c), being it possible to leave it just like that for coarse finishes as for example for industrial plants, and where it is additionally possible that the interior layer and especially the exterior layer may be a brick wall where the bonding element may be the very same polyurethane that is the thermo/acoustic layer, and in which at the same time that the thermo acoustic layer is formed seeps between the bricks, setting and thus bonding them together and to the nucleus, as described above. It is of course possible not to manufacture the brick layer inside the mould, but outside it, be it on or off site.
11) The layered wall may be formed only by two external water resistant layers of rigid resin such as poliurea or similar, or in the style of plastic membrane, synthetic material or otherwise polymeric material, or cementitious material or ceramics, or any other useful material, that will be bonded to the polyurethane or similar material in the expansion process of same and that at the same time comprises the insulation nucleus contained in between the two rigid resin layers (or other material), being optional if said polyurethane or similar nucleus contains or not the mentioned services.
12) The wall may be surrounded and contained by a metallic peripheral frame which may also be made of another acceptably rigid material such as for example wood, and said wall may have been formed inside a mould made by a metallic frame -or other acceptably rigid material- which will form its periphery and to which the mould's doors are attached, being it that the wall's frame and the mould's frame are like an internal and an external frame.
13) The prefabricated wall may have some or all the services connections inside the skirting board or baseboard, or optionally through the wall's upper part, be it on the internal edge or on the external edge, as is shown in the figures, or even inside the roof, which is manufactured in the same way.
14) The connections of the various service connections that go through the roof and/or through the walls or through ducts or cavities formed inside the walls/roof may be solved internally or externally with respect to the wall/roof, through threading, welding, micro welding, microfusion, pressure assembling or connecting, or any other.
15) When it is desired to build a construction with the rood ending in a square angle with the wall, without eaves or parapet, the junction of the diverse roof service connections with the wall service connections goes through a cavity enlarged at the roof's very end, just where same joins the wall, and a similar cavity on the upper extreme of the vertical wall, such that the enlarged roof cavity or channeling is exactly above the wall's enlarged cavity, thus forming a kind of duct, and an angled detachable moulding shuts the duct formed by both enlargements of roof and wall cavities from the interior side of the roof-wall angle, being said moulding perfectly water proofed and applied be it on the panel's internal side, over the polyurethane or similar nucleus, over the frames delimiting roof or wall, or over any other part of both, ensuring total water-tightness but at the same time allowing access to the duct in necessary.
16) When it is desired to obtain a construction in which the wall goes higher than the roof, with a parapet, the wall's and roof's ducts/cavities are joined by means of a cavity or duct enlarged in the roof's extreme just where same joins the wall, with a similar enlargement in the interior side of the duct/cavity in the wall, such that the roof's enlarged cavity rests exactly by the side of the enlarged cavity in the wall, this forming a cavity similar to a duct, and where an angled detachable moulding shuts the duct thus formed by both cavity enlargements from the inside (inside with respect to the construction) of the wall-roof angle, being this moulding perfectly water-proofed and applied be it on the interior side panel, on the polyurethane or similar nucleus, on the wall's or roof's frame, or on any other part of same roof or wall, thus ensuring total water tightness but at the same time allowing access to the duct if necessary.
17) The cavities/ducts may be joined through the angle formed by the upper part of the roof and the wall.
18) In the manufactured wall, when it is desired to build a construction with the roof overhanging over the upper part of the wall (that's to say forming an eaves), the roof and the wall cavities are joined by means of an enlarged cavity in the roof just over the point where same joins the wall, and a similar cavity in the upper part of the wall duct, such that the enlarged roof cavity is exactly above the enlarged wall cavity, thus forming a kind of duct, and where an angled detachable moulding shuts the thus formed duct from the interior side of the wall-roof angle, being this moulding perfectly water-proof and attached be it on the interior side panel, on the polyurethane nucleus, on the wall or the roof frame, or on any other part of roof and wall, thus ensuring total water-tightness and at the same time the possibility of accessing the duct if necessary.
19) In the manufactured wall, in order to externally join the cavities/ducts of roof and wall-that's to say on the building's external side- the roof and wall panels may be fixed in such a way that the roof's weight when standing on the wall does not occupy the whole of same's width, but only up to the beginning of the wall's duct or cavity, in such a way that both the wall and roof cavities don't need enlargements, since the room is externally demarcated by an angled moulding which is perfectly waterproofed and that will shut and demarcate the duct thus formed, generating in this way a space through which connections may be made, as well as the transportation of electric wires and other conduits. This cavity or duct is consequently covered by a moulding made of metal, polymer or other useful material.
20) In the manufactured wall, when it is desired to obtain a building with additional rigidity or additional strength, and on top (or instead of) the methods described of module joining, be it of wall or roof modules, a welding point at desirable and optional distances may be applied between the metallic frames of adjacent wall and roof portions, and/or between walls and "U" or "T" (or other shaped) frames or beams, when same are used, thus anchoring the wall to the cement platform which is the constructions' base.

A table describing the main differences with the best known methods follows.

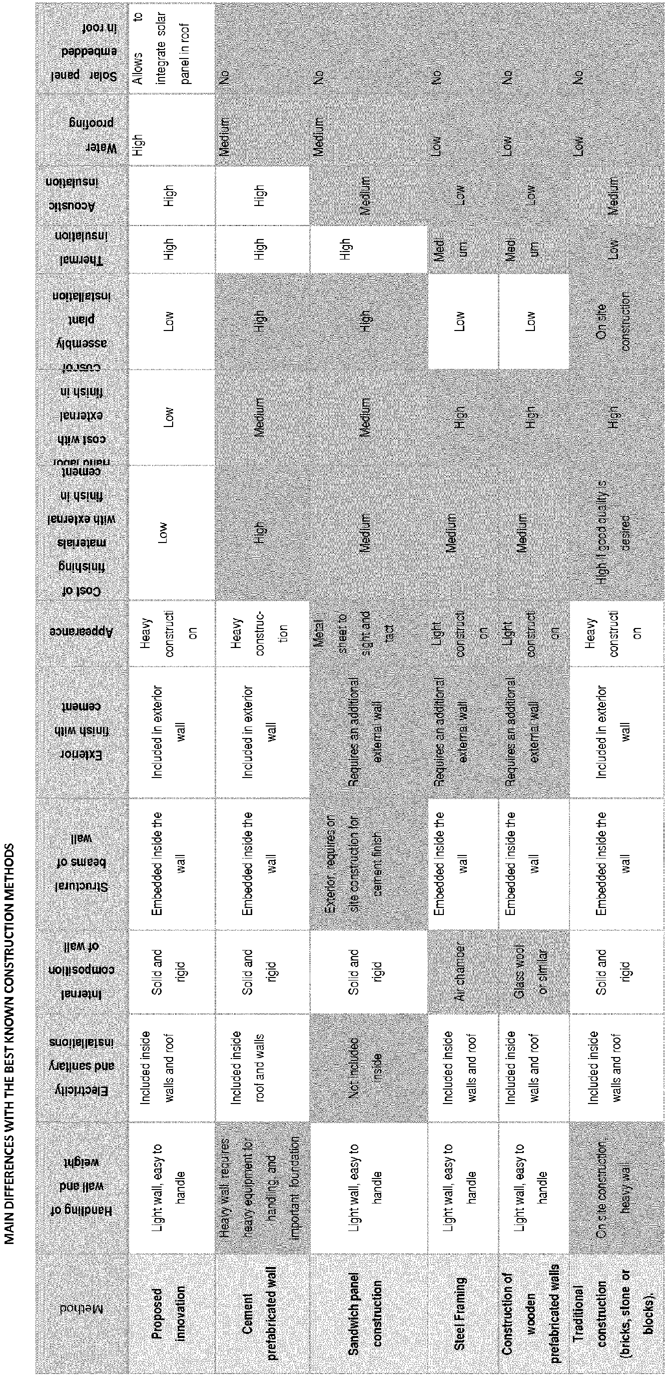

### Detailed description of the invention

The innovation consists in the off-site manufacturing method of a whole wall or roof (and the wall or roof manufactured by this method) or a part of it, said structure encompassed by an external frame (Nº 87, 99, 109, 112, 121, 242, 347, 364, 372) that contains the wall and internal frames for openings (windows, doors and otherwise), having in its interior a rigid nucleus that contains the electric, sanitary, ventilation, heating and other services as required, besides structural beams. The rigid nucleus is covered by an exterior and an interior layer or panel, being that said rigid and load bearing nucleus is at the same time the thermal and acoustic insulation.

We describe below the main elements of this invention. In between parenthesis we mention the numbers that describe the pertinent issue in the Figures.

### Frame

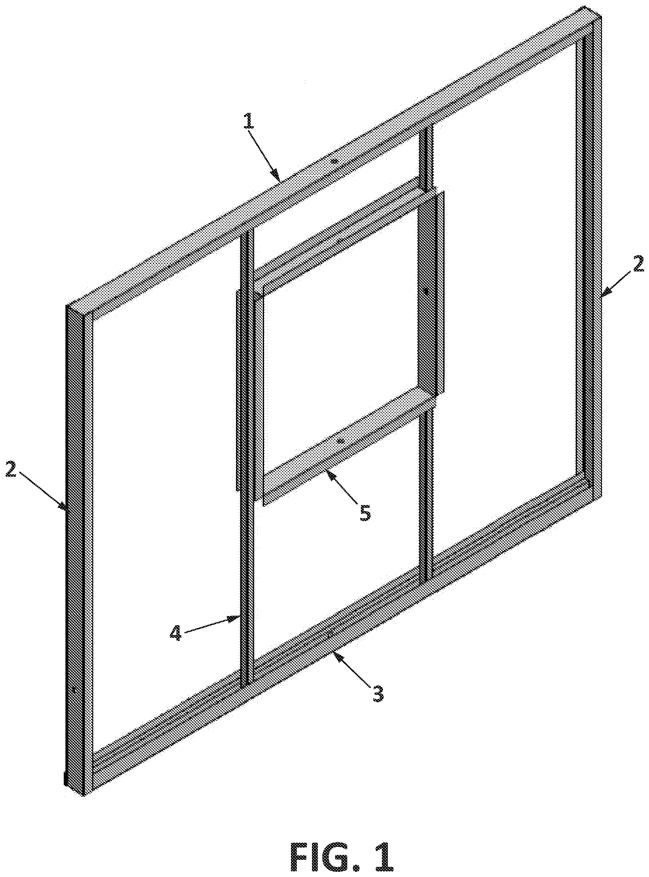

We describe by frame, shown in Fig. 1, as the metallic, wooden or otherwise structure which fulfills the function of containing and enclosing the walls and that contains the rigid load bearing nucleus which is at the same time the thermal and acoustic insulation, as well as structural components (beams) and services, as required. The frame is formed by the external frame (Nº 87, 99, 109, 112, 121, 242, 347, 364, 372 and the internal frame(s) (nº 5).

The external frame (Nº 87, 99, 109, 112, 121, 242, 347, 364, 372) is the one that borders with the roof part (Nº1), floor part (Nº3) or other wall part (Nº2).
The interior frame (s) (Nº5) is the one that contains openings such as doors and windows.

Structural frame or beam (Nº4) is the metal, wood or otherwise structural element that may be used to add structural strength to the wall or roof, that is fixed to the external frame and that is immersed in the polyurethane nucleus with the purpose both of increasing the wall's structural strength and being the support for window and door internal frames.

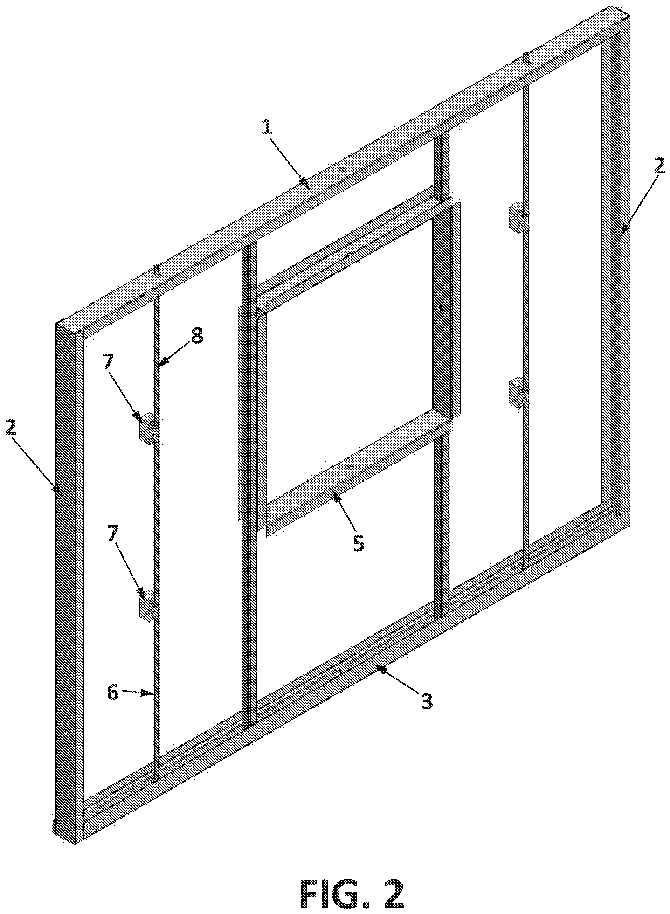

The frame shown in Fig. 2 is formed by an interior frame and an exterior frame and all the services to be included inside the wall, like electrical connections (Nºs 6,7,8), sanitary and other services, as well as the structural reinforcements (Nº4) and the openings (Nº 5).

The already moulded wall is formed by the frame, the panels (if used) or the covering layers if they have been applied either manually of by means of machines, and which act as cover and protection of the rigid nucleus and of any service included inside same, reticular structure (chain wall) if used, beams and internal frames.

### Construction with internal structure

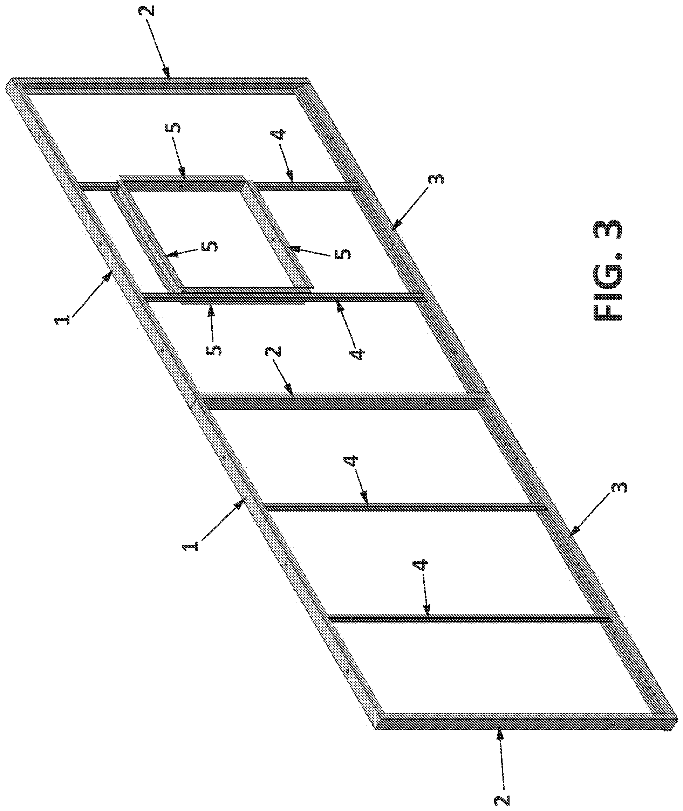

Fig. 3 shows the wall module structure and beams. Immersed in the rigid nucleus are the structural beams (sheet metal)(Nº4). The distance between these beams, as well as their shape and thickness are determined by the load the structure will bear and by the need to fix the internal frames to them.

These beams are fixed to the wall's external frame (Nºs 87, 99, 109, 112, 121, 242, 347, 364, 372), and also serve the purpose of fixing and holding the internal frames for openings (Nº 5).

The plant production of a whole wall, prefabricated and custom-made, with structural beams and services immersed in a light and rigid nucleus made of a material such as polyurethane is a solution that does not exist in the market or in the state of the art, especially if said polyurethane or similar besides its acoustic and thermal properties has a rigidity that is enough to substantially help in the walls structural and load bearing aspect.

### Construction with External Structure.

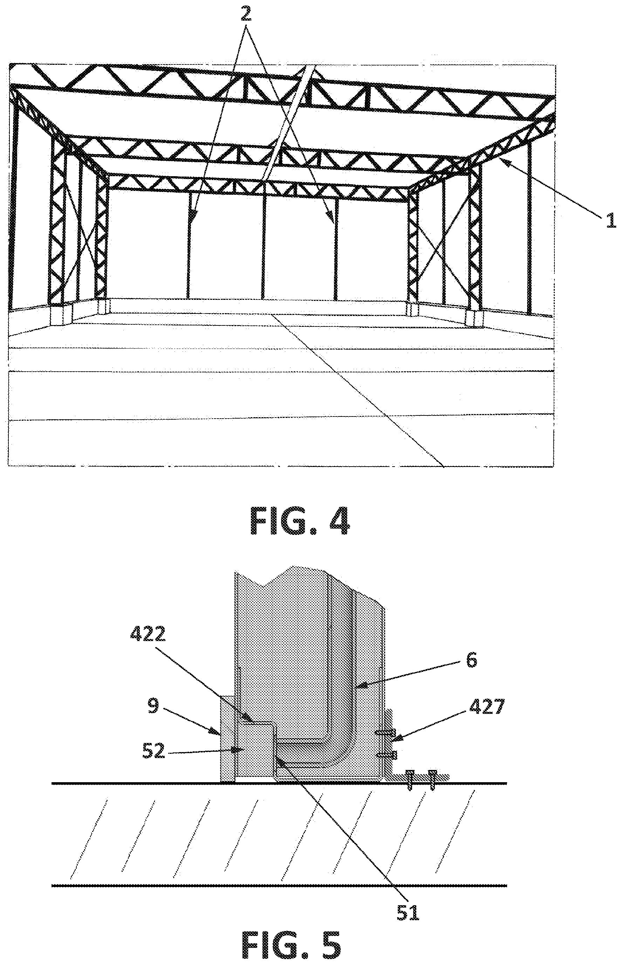

It is possible to generate constructions with the same type of wall but instead of having the frame and beams inside said wall, the modules are fixed on an external frame structure that is installed in an independent way as is shown in **Fig. 4****,** where a construction having an external frame structure is shown (1 external structure and 2 are the modules).

### Services

The services, electric, sanitary and of any other type that the customer wishes to incorporate, such as heating, ventilation, water drainage, gas containers, cable TV, etc., may be included inside the walls. For this reason said services must be included inside the frame during the manufacturing process.

### Service conduits through the baseboard or skirting

In the house of building's interior, service wires and pipes are included in the cement platform, and may communicate with the wall wires and pipes (Nº 6) through orifices en the wall's external frame (Nº 51).

The shape of the wall's external frame, through which the service conduits must pass -if so desired-may have a fold that generates a duct (a duct for wiring is shown in Fig. 5) that serves the purpose of being the conduit through which electric wires and other services go along the wall(s).

Wires, pipes, and ducts for other services may go along the external frame in the joint roof-wall or wall-floor. On the end of said conduits wires are covered by a skirting board as shown in item Nº 9.

The pipe (Nº 6) may connect through the roof conduits through a connection in the building's exterior or in its interior, and which are detailed as follows:

### Conduit connections: Roof with External Wall.

### Exterior Method

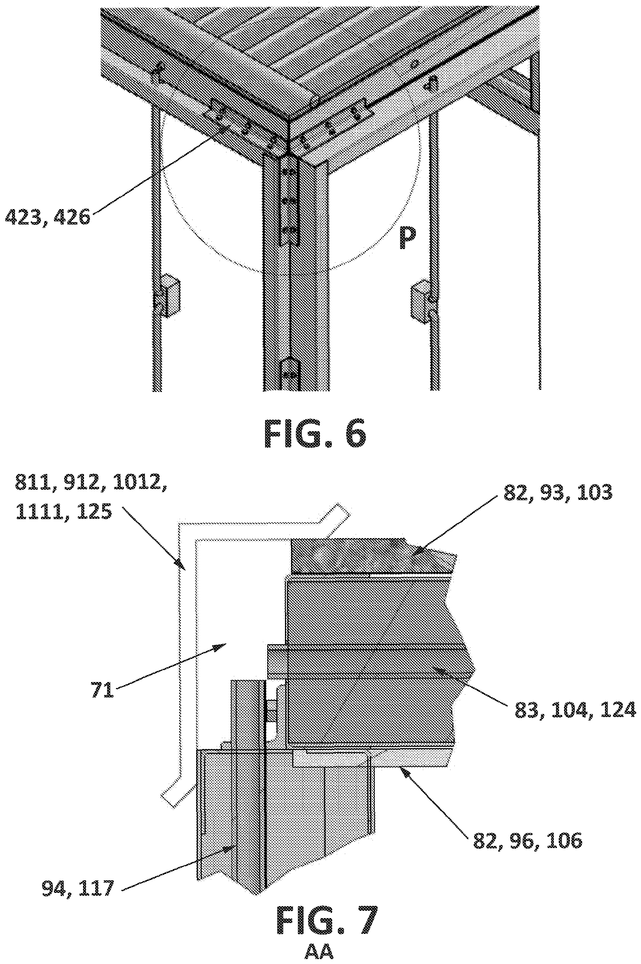

Fig. 6 shows a roof-external wall service connection following the exterior method.

In order to connect the roof-external wall conduits on the outside of the building , the roof and wall modules must be attached according to Fig. 6 and Fig. 7. In this way a room/space Nº 71 is generated, so that through it the electric wires, pipes, etc. will pass and go along the wall-roof junction. This room/space Nº 71 will later be covered by a metal moulding (Nºs 811, 912, 1012, 1111, 125) according to Fig. 7.

### Interior Method

There are different ways of attaining the service conduit connections according to the above mentioned room/space, according to the type of geometric finish desired for the building.

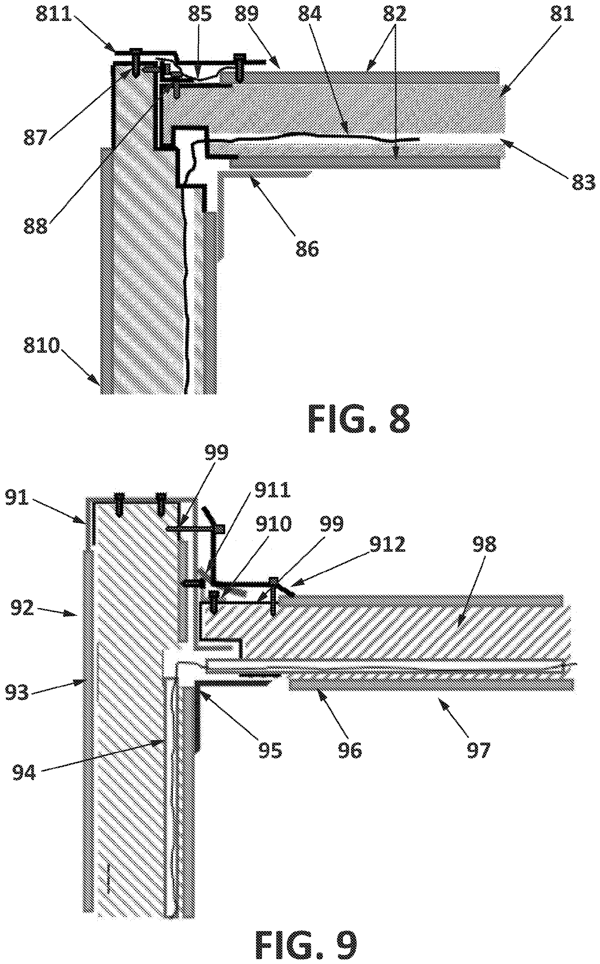

If it is desired to have a building with the roof ending at a square angle with the wall and without an eave, then the configuration shown in Fig. 8 may be used. This figure shows the union of an exterior wall and an eave-less roof.

If it is desired to have a façade of the building with an elevated parapet that protrudes above the level of the roof, the configuration shown in Fig. 9 may be used, same illustrating a union between an exterior wall and the roof.

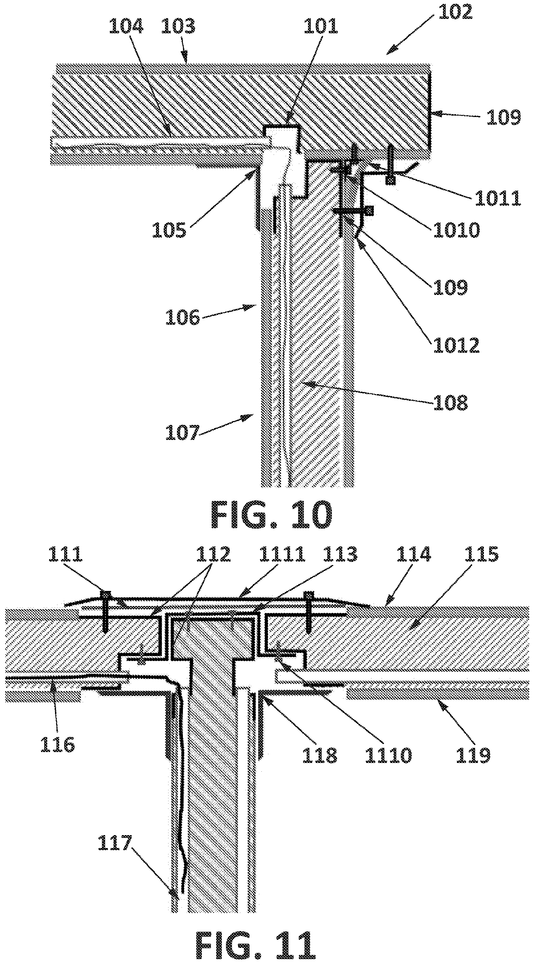

If it is desired to have a building with the eaves overhanging beyond and over the wall, then the configuration shown in Fig. 10 may be used, same showing the union between an external wall and a roof with eave.

The exterior finish mouldings are represented by item Nº 811 in Fig. 8, Nº 912 in Fig. 9, and Nº1012 in Fig. 10, being that they may be substituted by mouldings made of the same material as the wall's exterior panel, or the covering layer if same is applied instead of, or over, the exterior panel.

### Conduit Connections: Roof With Internal Wall

The roof portions or modules may be joined taking as a support base an internal wall. This junction may be attained at the level of an internal wall (Interior Method), or leaning roof modules on the internal wall (Exterior Method).

### Interior Method

Fig. 11 shows an electric connection in the case roof modules are connected at the level -and being supported by- an internal wall, at the same level of upper edge of same. Over the wall's exterior frame (Nº 112) a sheet of metal or otherwise useful material in an "Omega" shape (Nº 113) is used, same acting as support of the roof modules (Nº 114). This "Omega" sheet is fixed to the wall's external frame by means of attachment elements as screws , bolts, etc. The roof modules are joined to the Omega sheet plate by means of attachment elements (Nº 1110. Once the roof modules juncture has been made, it is water-proofed by means of poliurea or a similar material (Nº 111). After the water-proofing has been finished, the Exterior Finish Moulding is applied (Nº 1111).

### Exterior Method

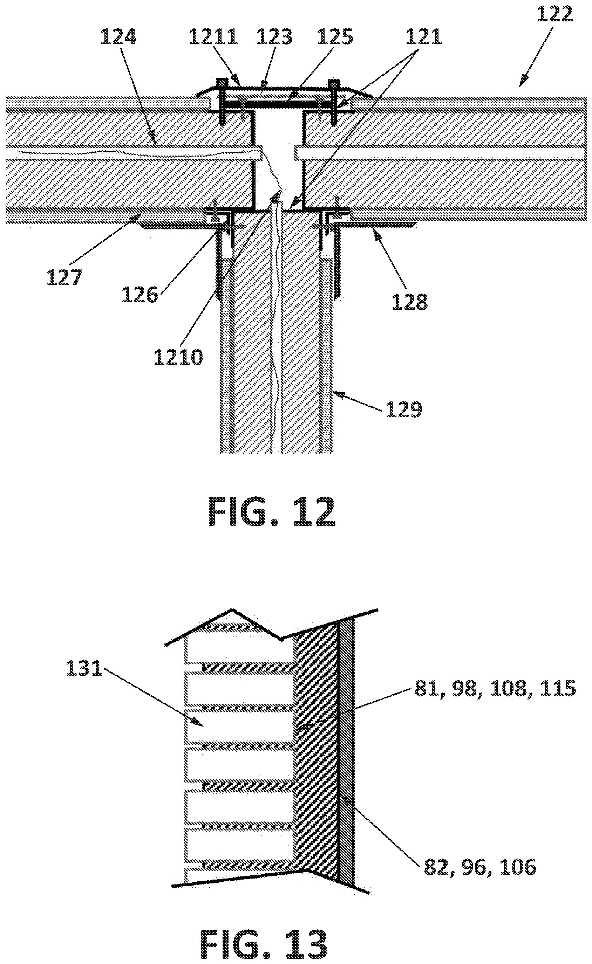

Fig. 12 shows an electric connection in the case roof modules are connected over an interior wall, being supported by same. The roof modules (Nº122) bear of the wall's exterior frame (Nº 121) and are held together to the wall by means of fastening angles (Nº 126), thus generating a space/ room between both modules and in such way allowing the service connection to be made between roof and wall.

This space/room or cavity is covered by an Exterior Covering Moulding for Conduits (125) that is later water-proofed with a layer of poliurea or similar material (123), and is afterwards covered by an Exterior Finishing Moulding (1211). The Exterior Finishing Moulding represented by items Nº 1111 en Fig. 11 and Nº1211 in Fig. 12 may be substituted by finishing items manufactured in the same material as the external covering layer, being possible that such a layer has been applied with or without an external panel, as we have seen before.

### Layers

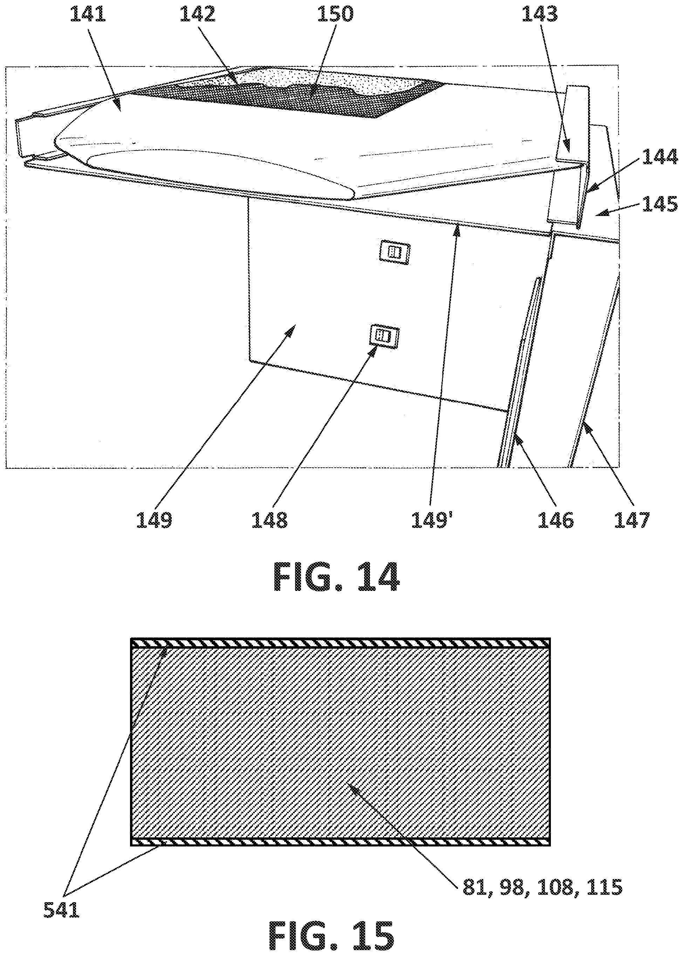

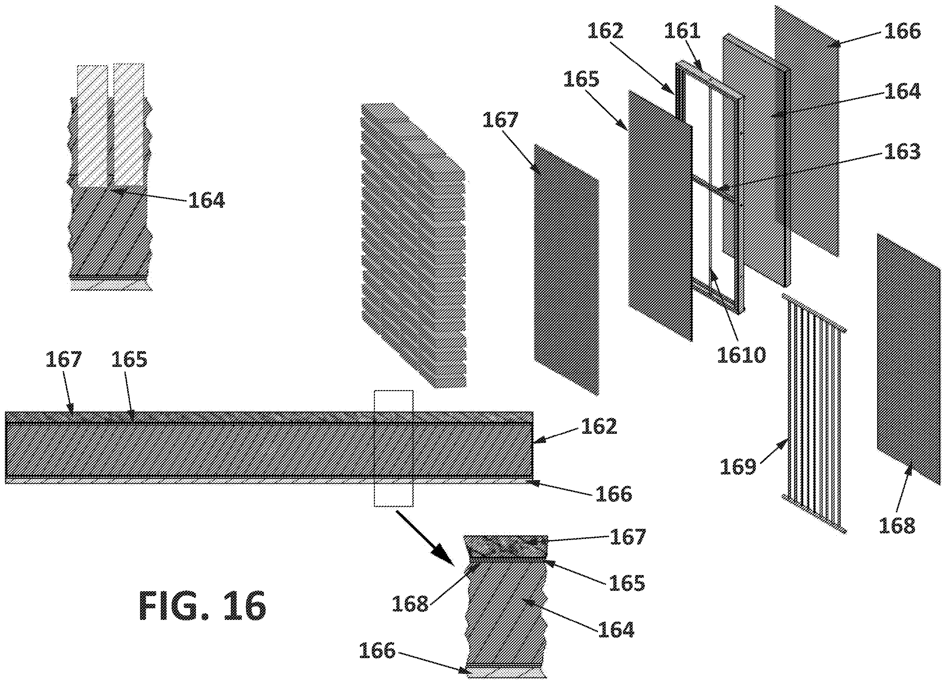

Fig. 14 shows a detail of the of the construction prototype's layers, and Fig. 16 shows the wall module layers.

The wall has an internal rigid polyurethane nucleus. This nucleus may also be formed by a material of similar mechanical, thermal and acoustic properties as polyurethane, and two covering layers -one in either side. The composition of internal and external layers may change according to the finishing desired, and it may vary both on the panel materials and/or the latterly applied layer (usually by airgun), if same exists.

It is possible to finish the wall without any type of covering layer or panel, or to manufacture a wall containing a single covering layer on one side only, with the polyurethane nucleus exposed on the other side.

It is also possible to use the poliurea, or an hydrophobic membrane, as exterior and/or exterior layers, without any other further layer or finish. In this case, the poliurea layer -if there is one- should be preferably of greater thickness (more than 1 mm), so as to ensure firmness and rigidity to the wall (Fig. 15 shows a poliurea sandwich).

### Internal nucleus

The internal nucleus, usually of expanded polyurethane (Nº 164), provides rigidity as well as thermal and acoustic insulation. This layer's width is usually from 3cm to 30cm, although this is basically as the customer requires.

In a different way to the light construction systems currently in the marketplace, in this case the wall is a self-supporting structure, that's to say that the on-site construction does not need beams to anchor the wall to the cement platform, since those beams are embedded in the polyurethane nucleus, or the very same frame of the wall is enough for its anchoring to the concrete platform.

On the other hand, the system counts with a rigid nucleus without air chambers or non-rigid components as glass wool or expanded polystyrene, which are frequently used as insulating stuff between the exterior and the interior panels.

The rigid polyurethane (or similar) nucleus provides structural strength and rigidity -more so if it is covered with poliurea- as well as improved thermal and acoustic insulation properties.

### Cover layer

We define as cover layer (Nº 166) the face of the wall that is facing the atmosphere, be it outdoors or indoors. Each wall module counts with one -in case one face of the nucleus is left uncovered, or two. It could be none cover layers in case it is decided to leave the polyurethane nucleus exposed.

This layer may be the only material that is put in the mould during the manufacturing process (that's to say inside the pressure mould), or it may be formed by different sub-layers that are applied and adhere successively to the nucleus once same has been taken out of the mould.

### Cover of applied cementitious layer

The applied cementitious layer cover (Nº 167) may be applied on the wall's exterior or interior face , and fulfills the functions of at least providing finish, cover for the polyurethane nucleus, additional rigidity plus providing the looks of a traditional brick wall (which is usually finished with a cement covering layer).

This layer's thickness may be of a few millimeters to several cm, and it may be applied in one or more instances. In case traditional (Portland) cement is applied, and if it has a thickness of several mm, same is held or supported to the panel by means of a wire mesh (Nº 168) attached to say said panel.

If the cement layer's thickness is of a few mm, it may be applied directly on the polyurethane nucleus without the need of a holding wire mesh (Nº 572, 168)

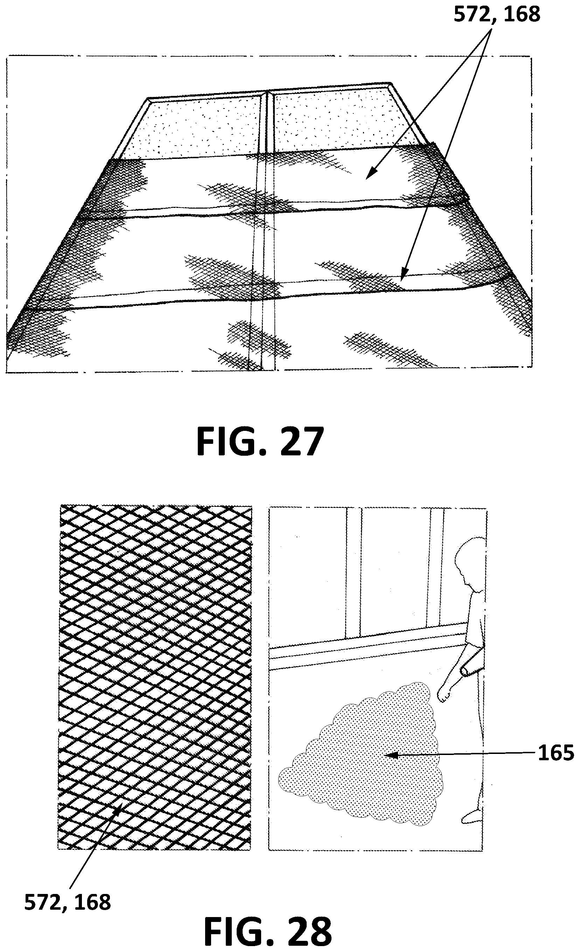

The mesh (Nº 572, 168) may be metallic or polymer made, or of any other material that fulfills the purpose of fixing the cement, and has the purpose of fixing the outer (either interior or exterior side, or both) cement (or similar material) layer to the rigid nucleus. Fig. 27 shows the anchoring of this fixing mesh (Nº 572, 168) to the polyurethane nucleus.

Besides acting as holding and fixing the cement to the polyurethane nucleus, this fixing mesh (Nº 572,168) provides structural strength and rigidity, and for this reason the mesh's reticule size, as well as the thickness of the wire or similar material is a function of the desired structural strength as well as its resistance to impacts and even security/safety reasons.

The fixing mess (Nº572, 168) will adhere by means of the adhesive material Nº 165 like polyurea or similar material to the panel(s) or the polyurethane nucleus, or else it will be mechanically fixed to the wall's frame by means of screws, bolts, staples or similar methods.

The polyurea is projected (applied) as if it were paint. Fig. 28 shows the projection of polyurea on the fixing mesh (Nº572, 168). The polyurea has the functions of adhering the mesh where the cement is sprayed to the polyurethane nucleus or the external panel(s), as well as generating an impermeable layer in order to protect the nucleus against humidity. The thickness of the polyurea layer is usually about 5mm.

There is a possibility of attaching the mesh to the polyurethane nucleus with other type of material besides the polyurea, and its application may be in spray, with a brush or roller or similar method, or even with staples.

The use of polyurea or similar material as an adhesive means for the wire mesh on which the cement will be applied is an innovative solution not used for this purpose in the state of the art. Furthermore, the polyurea itself may improve the wall's structural strength and its resistance to impact. Thus, the combination polyurethane - polyurea has many advantages as bonding, structural strength, resistance to impact and resistance to humidity.

### Cover layer with prefabricated panel

It is also possible, instead of adhering the wire mesh to the polyurethane nucleus, to finish the cover layer with a prefabricated panel which is put inside the manufacturing mould and is adhered to the polyurethane nucleus during the expansion process of same.

There are various types of panels for such purpose, as for example: gypsum panels, Medium Density Fiberboard (MDF) panels, metal sheet, polyesthirene panels, wood panels, Oriented Strand Board (OSB) panels, cementitious material panels, panels simulating brick walls, or simulating other finishes, or even real stone panels or bricks or tiles, or any other panels used for finishing walls on either the external or the internal side.

In case the wall is manufactured in its mould without covering panels, they can be attached to the polyurethane nucleus (or to the periphery frame) after said wall has been taken out of the mould. Said panels may be attached -usually to the polyurethane nucleus- through some adhesive substance, or, usually to the frame, by means of mechanical fixing methods, like bolts, screws or similar.

### Cover layer of bricks, stone or similar materials

As the outer cover, but in this case not a panel, it is also possible to use bricks, stones, ceramics, glazed tiles or similar materials that may be put on the moulds bottom and that will be adhered to the polyurethane nucleus during same's expansion process.

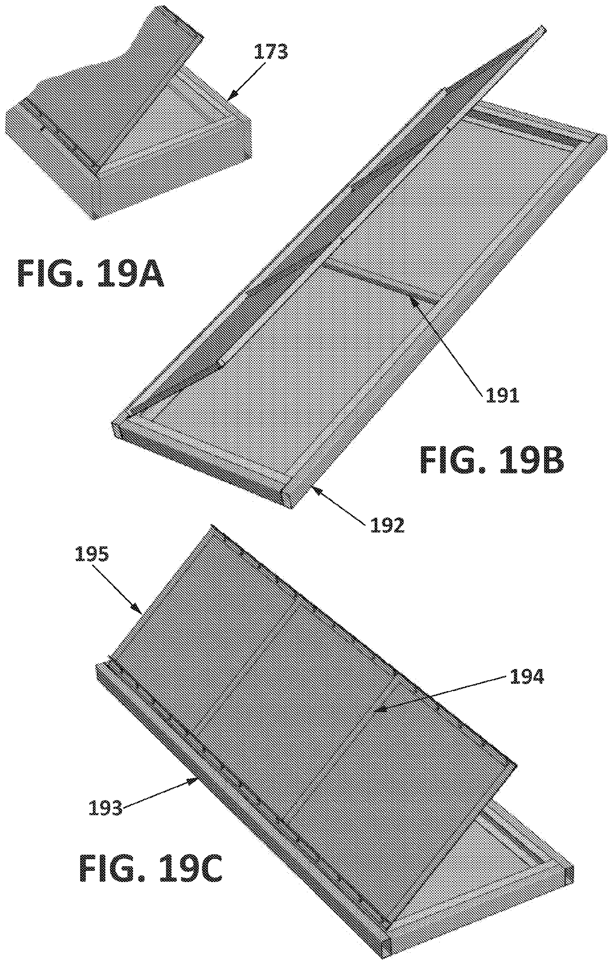

In order to manufacture walls with a brick, stone or similar materials with a substantial thickness with respect to the nucleus, a mould whose frame is of a substantially improved height with respect to the paneled wall must be used, as is shown in Fig. 19

During the expansion process, the pressure forces the polyurethane in between the bricks or similar, binding them between themselves and with the wall frame and nucleus. This results in a true combination between the traditional system and the similar and lighter one that we have described above or other options of this invention. Fig. 13 shows a wall lateral cut with exterior cover wall made of bricks.

### Cover layer of ceramics or similar

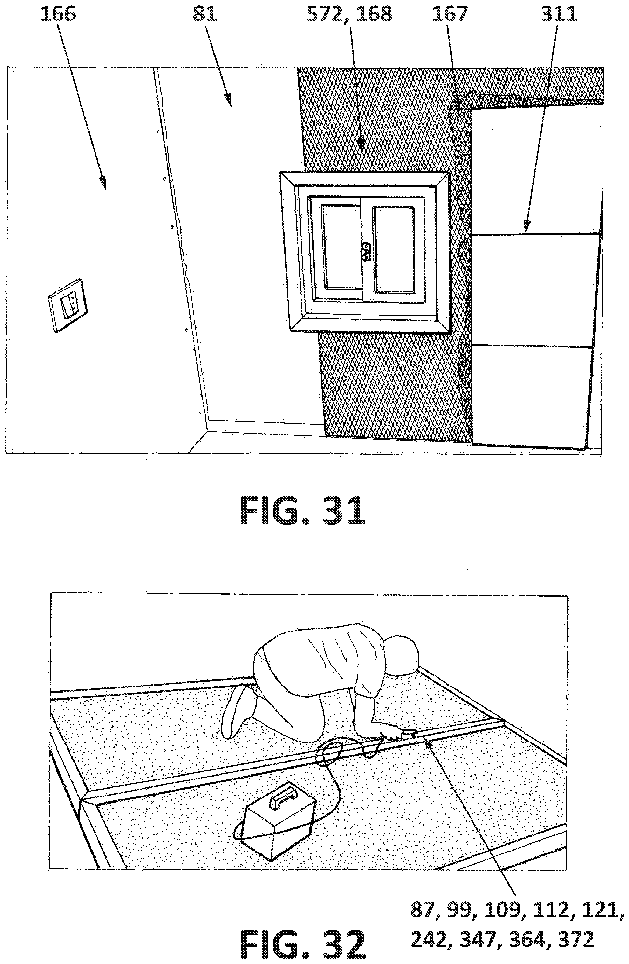

In case it is desired to finish the internal side (or for that matter also the external side) of the wall with ceramics, same may be directly adhered (glued) to the polyurethane nucleus (layer Nº 164), or they may be adhered by means of cement applied on the wire mesh, as shown in Fig. 31, where a ceramic covering layer may be seen with cement and wire mesh.

It I also possible to put the ceramics of the mould's bottom, being them adhered during the polyurethane expansion process, just as we have seen with bricks and stone.

### Cover layer for roof with solar panel

In case it is desired to use a part of the roof (or all of it) as a solar panel, a pipe system with collector is applied as the wall's external layer (or part of it), as shown as in Fig. 16, item Nº169. These will later be used in order to circulate the heating fluid using the very same roof as solar panel.

A heat collector built-in the roof itself as its external panel is now yet known in the state of the art. For that matter it may obviously be built in the wall, especially in higher latitude places where the Sun does not significantly rise over the horizon.

### Polyurea and hydrophobic membrane sandwich panel

The Polyurea and hydrophobic membrane sandwich panel shown in Fig. 15 is a simple version of the wall or roof modules of this invention, as well as for other uses besides this invention.

This panel has a polyurea external layer, and/or an hydrophobic membrane that may be plastic, synthetic or of a similar material, being that its thickness may go from about 1mm to about 10 mm either when applied separately or is bonded to the polyurethane's nucleus during same's expansion process. This is also valid in case polystyrene of any other similar material is used instead of polyurethane, and may have a thickness that may go from 1cm to 40 cm.

The application of polyurea may be done in a manual way, through an airgun and pertinent spraying equipment, or by means of a manufacturing line where the polyurea is applied on the rigid polyurethane nucleus in a continuous o semi continuous manner.

The sandwich panel formed with a polyurethane rigid nucleus plus an hydrophobic membrane and/or polyurea, all inside a frame and moulded in a pressure mould is an innovative product and manufacturing process not found in today's state of the art.

### Floor assemblage

The floor must be built on-site before mounting the walls set-up. It consists on a normal concrete platform designed to bear the required structural demands of each construction.

The wall anchoring to this conventional concrete platform will be made when it has properly set, there being no particular time limit between the platform's construction and the walls set-up.

It is also possible to build a floor with the same type of modules as is herewith proposed, or of any other type of floor construction available in the market. The floor platform must contain, at least, the electric and sanitary services required by the building's design.

An explanation of the manufacturing process follows:

### Mould

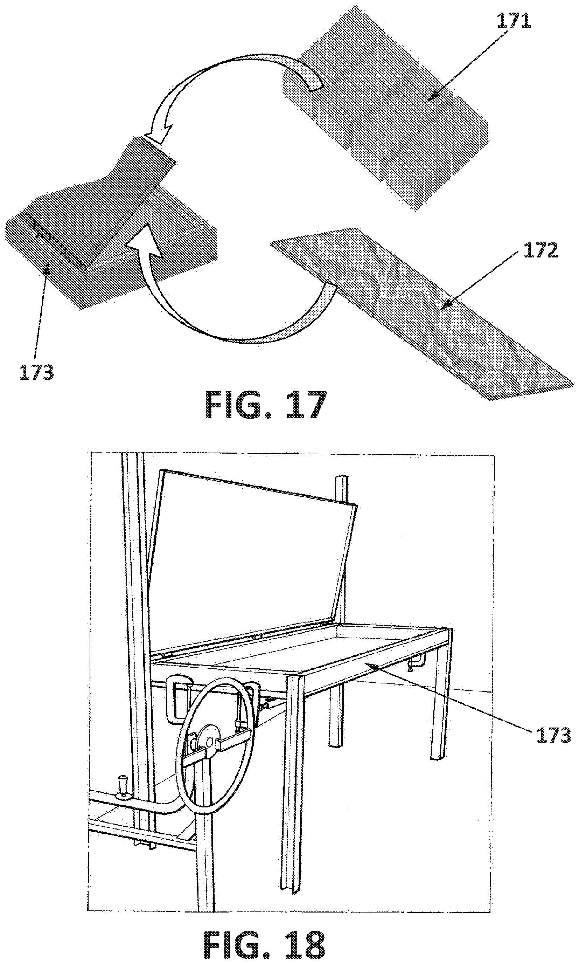

It is in itself of robust construction, able to hold the wall's frame and both panels, inside which the wall will be manufactured, having this mould metal lids with structural reinforcements that can sustain the high pressures generated by the polyurethane's expansion. Figures 19A, 19B and 19C show the mould's outline from different views. Fig. 19A shows a mould 173 with an increased depth in order to manufacture walls with a brick, stone or similar finish. Fig. 18 shows a hinged-style mould of 3x1 meters. Fig. 17 shows a mould (Nº173) where of several bricks (Nº171) are introduced, and with a prefabricated panel as internal and/or external layer.

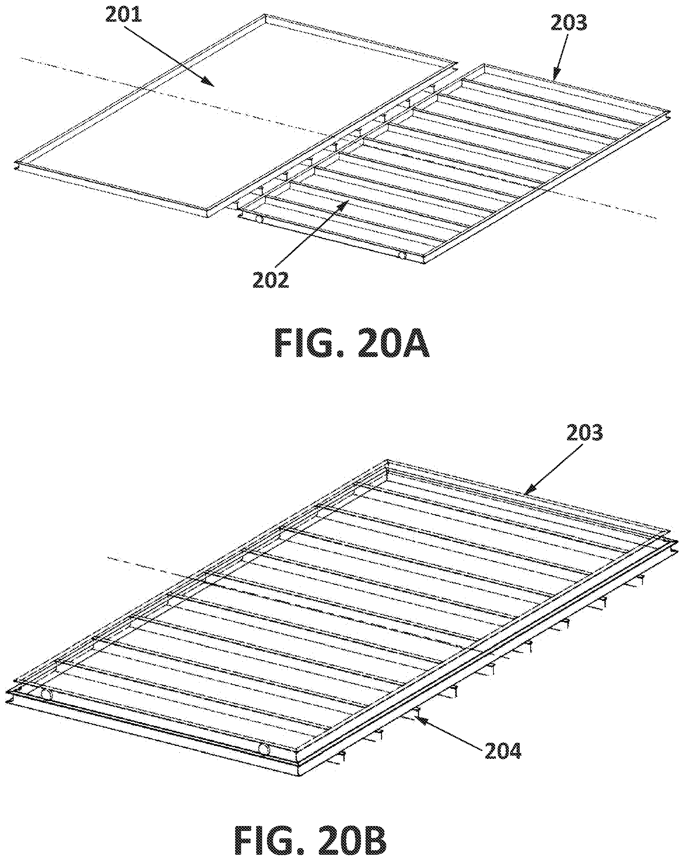

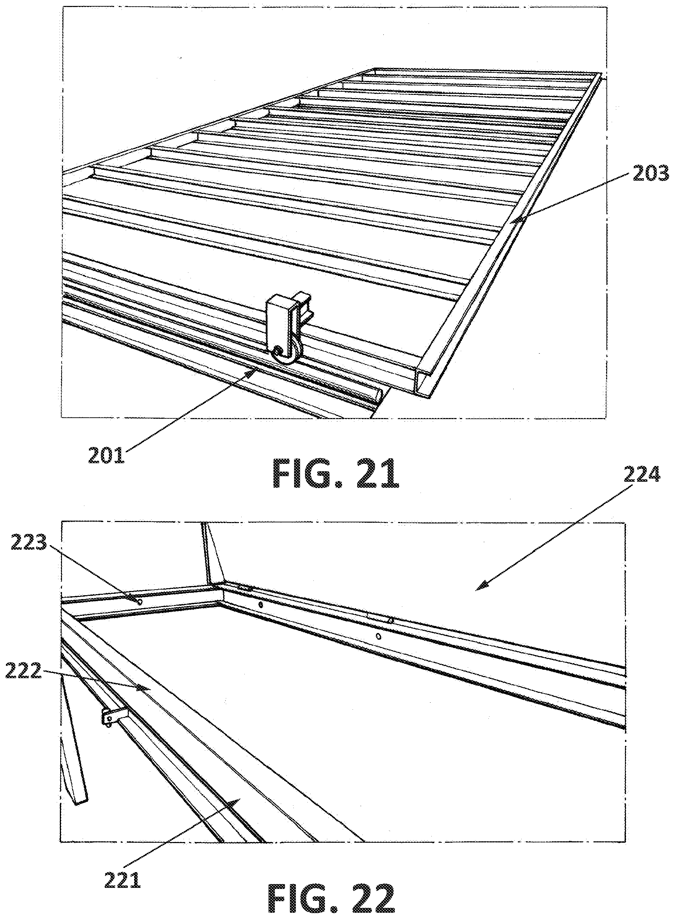

For lesser size moulds it is possible to use the hinged type lid as shown in Fig. 18, but for bigger moulds it is preferable, for safety reasons, to use a mould with a sliding lid as shown in Figs. 20A and 20B, where an outline of a 6x3 m mould is shown with the lid in an open position (Fig. 20A) and in the closed position (Fig. 20B). Fig. 21 shows a mould Nº 201 , 6x3m, with a sliding lid 203 for the manufacture of the complete wall.

In order to manufacture a wall or roof, a mould of equal or bigger proportions than the wall or roof we pretend to manufacture is needed. This may be seen in Fig. 60, where beams or blocks separate and fix a wall frame that is smaller than the mould. The lid, either hinged or sliding, is shown detached.

The manufacturing process will vary depending of the type of finish that is required.

### Assembly of wall's lower panel or layer (in case there is such)

If one of the covering layers must be finished with prefabricated panels, bricks or stones, or any other suitable material, the first manufacturing step is to put same in place inside the mould, resting on the mould's bottom, over the back lid.

Other option is to apply the cement as made on the back lid, wait for it so set, and then put the wall's frame over said layer and go on with the rest of the manufacturing process. On the polyurethane's expansion process, same is adhered to the bottom cement layer.

If both cover layers are made of prefabricated panels, then the first one is put on the bottom of the mould, and another panel is applied over the frame. This second or "upper" panel may be applied both in the mould, after the polyurethane has been injected and the frame has been taken out of the mould.

In case the wall is not made with exterior panels, the manufacturing process starts directly with the assemblage of the wall's frame.

### Assemblage of exterior frame

Once the panel is put on the mould's bottom (if such is the desired finish), the assemblage of the wall's frame is done, being that such operation may be carried out inside the mould and directly over the panel or cement (or similar material) layer, or outside it.

In case the finish does not require panels, the wall's periphery frame may be assembled directly on the mould's bottom, as shown in Fig. 22.

The wall's periphery frame parts, usually "U" shaped duraluminum beams or sheet metal profiles (it could also be of ferrous materials, wood, etc.) are connected among themselves by means of rivets, by fitting them together until they lock, by welding, by any combination of them, or by similar systems of the state of the art.

### Assemblage of internal frames

Once the wall's periphery frame is finished, the internal frames must be attached according to the desired wall design and to where the customer wishes to put the openings. The internal frames are held in place by means of screws, rivets, bolts, welding, etc. to the sheet metal or beams that reinforce the structure and are connected to the external frame, or that conform the external frame itself.

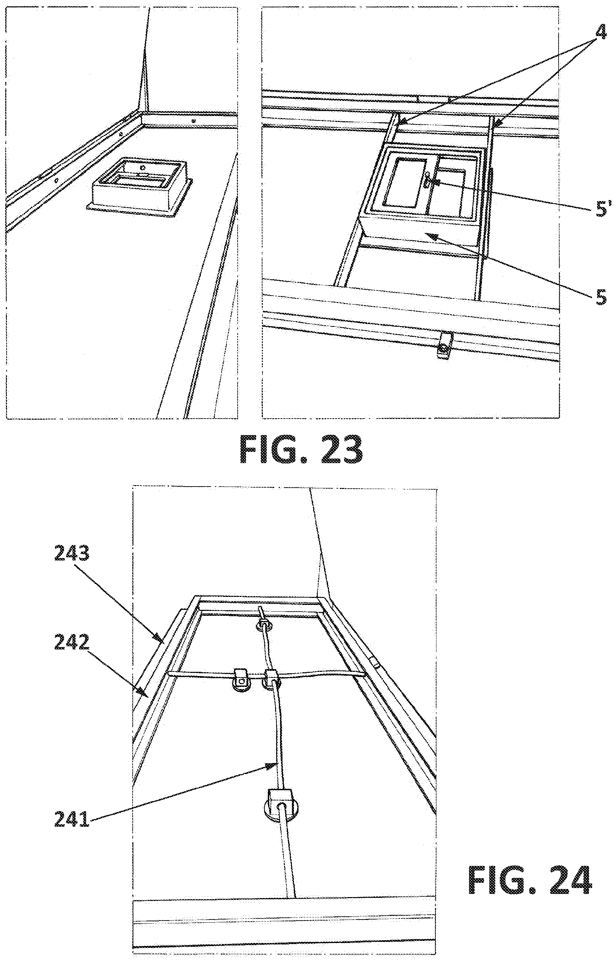

In this way, the places or cavities where the openings are to be installed will not be filled by the polyurethane nucleus. Fig. 23 shows the assembling of an interior frame (Nº 231) inside the mould.

### Putting together the frame

Once the internal and external frames have been finished, structural beams and services (piping, wires, ducts, etc.) are put in place and fixed if necessary to beams and frames, according to the customer's requirement. These services will have the corresponding customized outlets by means of perforations on the side panels or even internal and external frames.

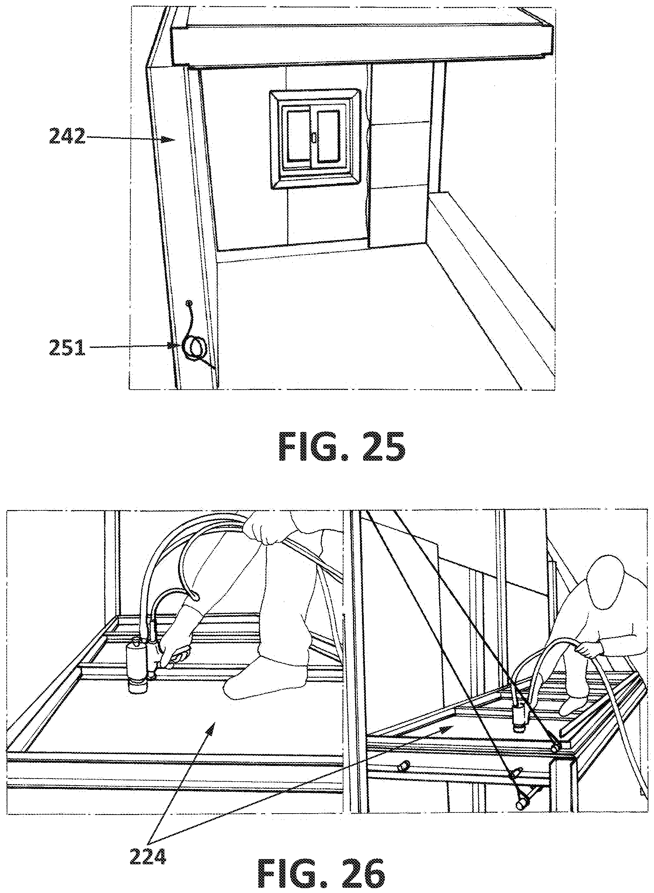

The very same electric, sanitary or other connections also serve the purpose of impeding the polyurethane to come out through the mentioned outlet orifices. Fig. 24 shows the electric installation inside the mould, obviously before polyurethane is applied. Fig. 25 shows the electric wiring (Nº251) coming out through the wall's external frame (Nº242).

### Fitting the upper panel (in case there is such)

In case the wall's upper face (as considered inside the mould) is covered by a panel(s), same must be set as the frame's lid before closing the mould's door and before perforating -through the door's orifices- the necessary orifices in said panel for polyurethane injection

The perforations shall be used for the polyurethane (or similar material) injection that will conform the rigid nucleus, and afterwards they will be covered during the wall's finishing operation.

It is also possible to manufacture the wall with materials that do not need to be injected, but may be poured inside the frame before adding (if such is the case) the upper panel and before closing the mould's door, something that may be done immediately, before the cement or similar material sets. It is even possible to work with polyurethane is this way.

### Closing of the mould

Once the frame with its respective panels (in case there are such) is finished, and before polyurethane injection, the mould is shut hermetically.

The mould's lid is fixed by mechanical means in order to contain the pressure resulting from the polyurethane's expansion.

It is not necessary to have such a robust mould if the product used as the wall's nucleus does not expand in its setting process.

### Applying the nucleus material through the mould

The mould's door or lid has small orifices of about 5mm in diameter or bigger, distanced between them for about 1 meter, and it is through them that the wall's nearest panel is perforated in order to reach beyond it to the space where the nucleus will be.

Through this orifices the polyurethane or similar material will be injected in order to obtain a nucleus with the desired density, being same of about 40 to 50 Kg/m³ depending on the product used and on the end pursued.

The polyurethane injection is made through a machine mixing its two components (polyol and TDI) and a spray-gun.

The injection may be done manually by injecting in one orifice at a time, or automatically injecting in multiple orifices at the same time. Fig. 26 shows the injection of polyurethane through the mould's lid (Nº224) and through the panel in a manual way.

### Expansion and drying

The polyurethane expands thus attaining a rigid nucleus. Once the polyurethane is injected in the mould, approximately 5 hours must be waited in order to take the wall out of the mould.

### Removing wall from mould

In order to take the finished wall out of the mould, the mould's upper door must be opened, and then the mould's exterior (periphery) frame is disassembled, being that said mould's frame was in contact with the wall's frame. Upon disassembling the mould's frame, the wall may be withdrawn from same.

It is also possible to withdraw the wall from the mould without the necessity of disassembling the mould's frame, but in this case some hydraulic or mechanical device is needed such that it will exert pressure against the mould's back side or bottom side. Obviously in this case the back cover will not be precisely a door or a lid with hinges, and it must not be attached to the immovably attached to the mould's frame. A sliding door is one possible option.

### Application of the cement layer (in case there is such)

If the wall is going to count with a cementitious covering layer (instead of a cementitious panel), same should be applied once the wall has been taken out of the mould.

The first step is fixing the wire mesh through staples, screws, bots, rivets or similar method, fixing it either to the polyurethane nucleus or to the frame, being that in this latter case the fixing means should be able to perforate the metal sheet or wood of the frame.

Besides, the projection of polyurea on the mesh and through it reaching the polyurethane will add grip and rigidity to the joint mesh-polyurea-polyurethane complex, although this step is not indispensable.

This procedure will improve the wall's (or roof) structural strength that our thermal insulation system generally adds to the wall, differentiating it from all other systems in the state of the art, where thermal and acoustic insulation is the structurally weak point of the system. Fig. 27 shows the fixing (anchoring) of the wire mesh.

After fixing the mesh to the polyurethane nucleus (or to the frame), polyurea (or similar material) is projected on same in order to completely fix and adhere the mesh to the nucleus. Fig. 28 shows the projection of polyurea on the wire mesh.

The next step is to cover the wall with cement. This part of the process may be manual or through machines that will automate the application system.

The cement may have various proportions of cement, lime, sand, additives, etc., each with its own particle size distribution so as to attain a relatively coarse or at least rough finish, or a very smooth one.

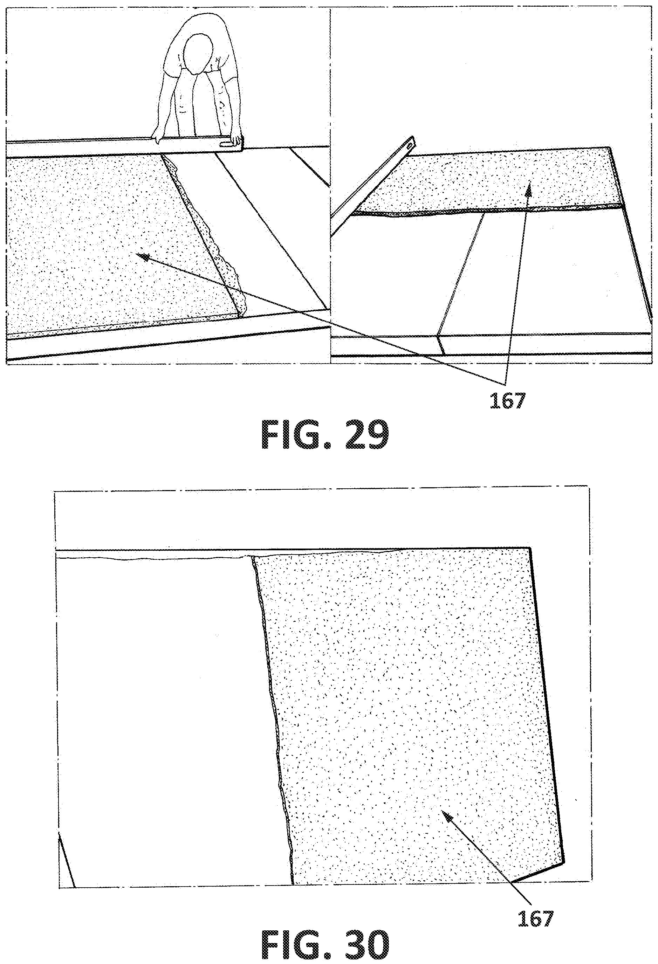

The cement mix may have a color agent which will make this layer have a color of its own, many times saving in this way any further finish, as paint. Thus, the wall could come out of the factory already "painted" in its final color -as requested by the customer- saving in this way substantial labor and raw materials cost. Fig. 29 shows the manual application of the cement covering layer (Nº 167), usually done with an airgun. Fig. 30 shows the finished wall with a cement covering layer.
Fig. 30 shows the partially finished wall with a cement covering layer Nº167

### Application of a ceramic or similar covering layer (in case there is such)

In order to cover the wall with some type of ceramic (or similar material) cover, same may be adhered to the nucleus during the polyurethane's expansion process or adhered after taking the wall out of the mould, this attaching being accomplished directly over the polyurethane nucleus by means of some bonding material which could very well be polyurea as described before, or through some cement mix applied or sprayed on the wire mesh and thus fixed to **the nucleus.** Fig. 31 shows a ceramic cover (item Nº 311) over cement (item Nº167) and wire mesh (items Nº 572, 168).

### Attaching and welding of structural unions.

When the in plant (off-site) walls construction is finished, and after their transportation to the building site, it is time to proceed to the fixed attachment of structural unions. In case welding is needed, it is made between the external frames of the wall's different modules. Even though this method allows for very long walls to be made off-site, walls that join at an angle (as length and width) will have to be rigidly joined on site.

Welding between finished walls or roofs frames is a novelty operation which is not found in the state of the art, much less between walls or roofs made off site. Fig. 32 shows the welding of outer frames (Nº 87, 99, 109, 112, 121, 242, 347, 364, 372) of two modules.

What follows is a description of the assembly process.

### Fixing the walls to the floor.

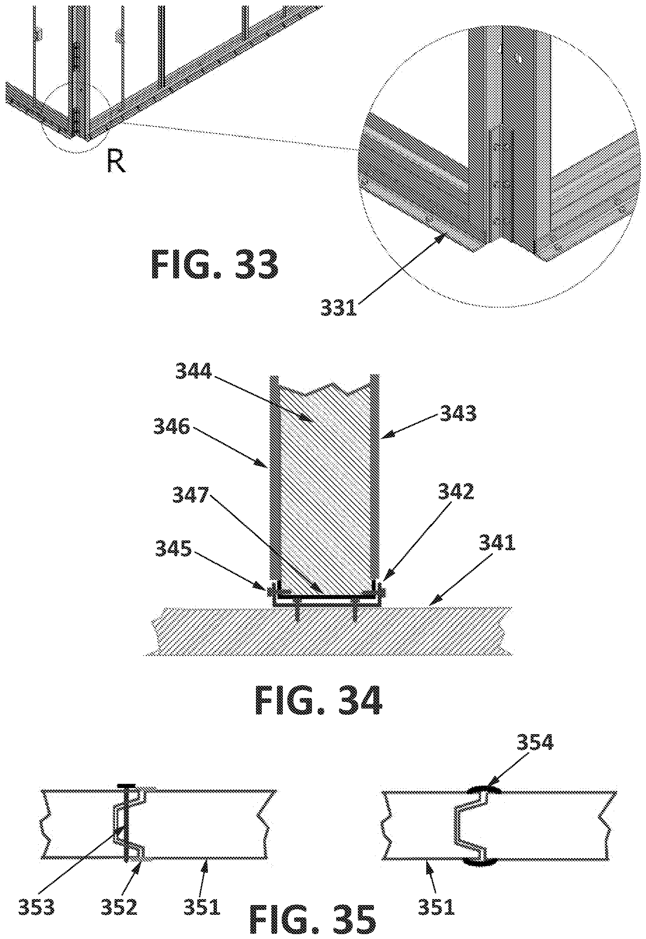

There are two main possible ways of anchoring the structure. Fig. 33 shows the anchoring of the walls to the floor's cement platform. The walls shall be fixed to the floor according to the detail of Fig. 33, which is herewith described.

The anchoring to the floor is made through metal sheet floor anchoring angle profiles (Fig. 33, Nº 331) drilled in order to be attached to the floor with screws of bolts, these angles fixing wall frames to cement platform. The union of these angle profiles to the metal (when such is the case) wall frames may be reinforced with welding points or with continuous welding, which will also impede humidity from entering between both metal parts.

The depth to which the screws or bolts or otherwise will go into the cement depends on the strength desired for the construction, the platform's thickness, the force of the region's most intense winds, and other climatic and atmospheric conditions.

Other anchoring methods may also be used, as for example a "U" shaped beam or profile (Fig. 34, Nº342) that may be fixed to the platform first, or even embedded in it when same is made, with the cement still fresh.

The "U" sheet profile beam forms, with the "U" with its open portion facing upwards, provides a kind of rail which facilitates the precise placement of the wall and its assembly, as well as improving the precision of the joints between wall modules, being that they fit more accurately and engage when being in said "rail".

This type of assembly makes the setting faster and easier, and it also protects the inferior end of the wall from the elements, being the whole assembly more robust. It must be noted that the fitting is metal vs. metal: "U" sheet profile and wall's frame, being thus much more rigid and strong than in many other inventions in the state of the art.

As said, before the "U" beam may be fixed directly to the surface of the cement platform, or dug into it when it is still fresh. Fig. 34 shows an outline of a wall anchored to the concrete platform

### Structural union of modules

Both wall and roof modules are joined between them through metallic elements that fix to them by means of screws, bolts, welding, etc., in such a way that the walls and roof are rigidly joined, as well as the walls to the floor. We call this type or unions "structural unions".

### Structural unions between two walls.

The wall frames may also have different geometric shapes in such a way as to generate a male/female lock-in between the adjacent vertical beams (sheet metal profile) of the frames.
Their lock-in may be reinforced by means of welding (Nº354) or through anchoring elements (Nº 353).

It may also be that the union's strength is simply provided by the pressure generated in the mechanical male-female lock-in. Fig. 35 shows the lock-in of different wall modules with lock-in geometry.

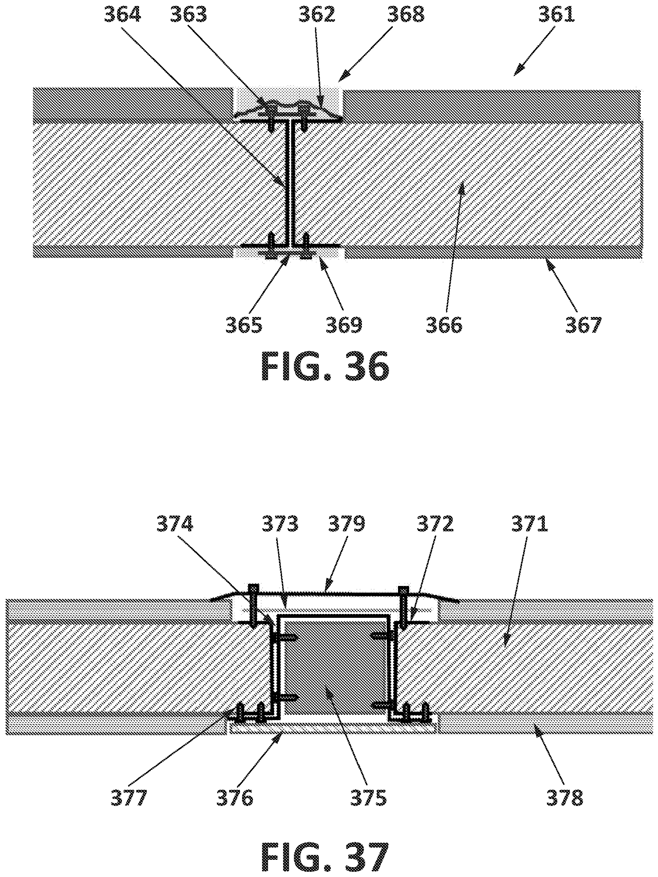

Yet another option for joining walls is the use of frames with rectangular geometry and connecting between them through union metal plates (Fig. 36, Nº 365) fixed to the exterior frames of two adjacent modules through screws, rivets, bolts, welding, etc. This will be an additional protection against the elements, something that is particularly useful in joining points.

Fig. 36 shows an upper view of the union of two walls with this type of technique.

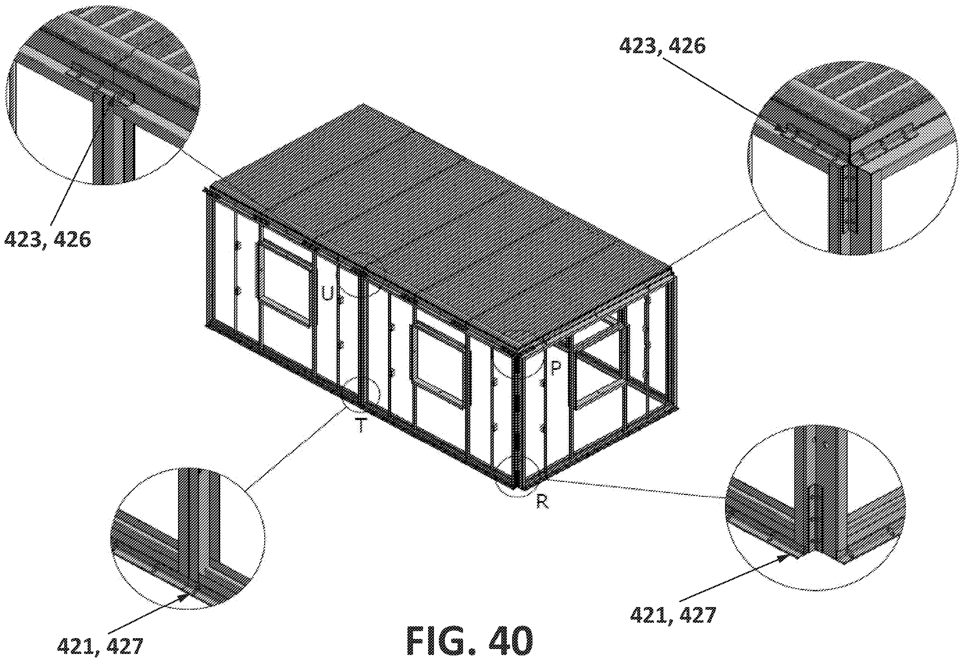

Fig. 40 shows a detailed outline where different types of structural unions may be seen, both using union metal plates and metallic angled profiles that fix together the modules external frames. These fastening elements may be fixed to the frames by screws, bolts, welding, etc.

### Structural wall-roof unions

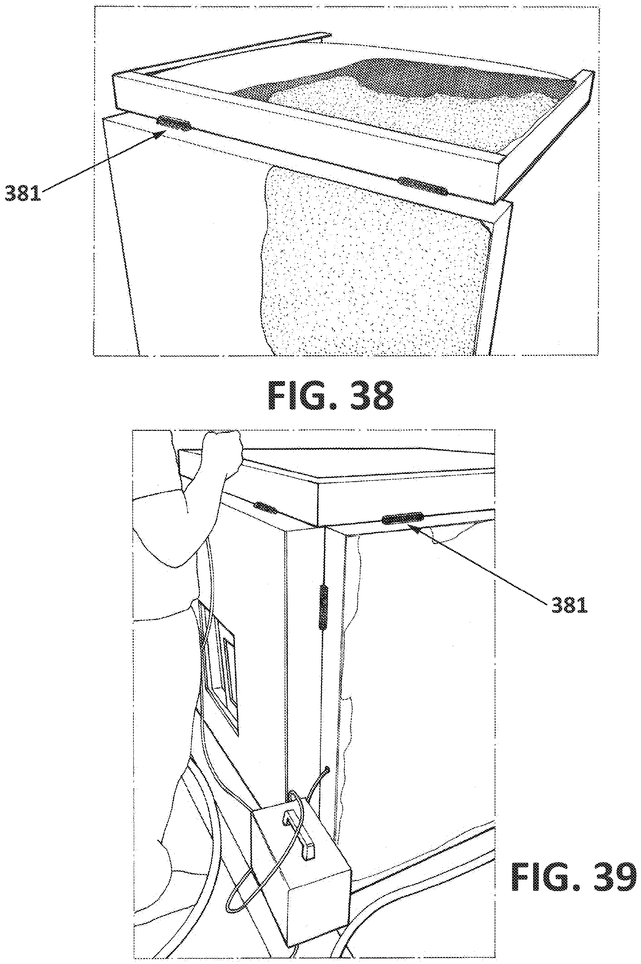

The structural unions between wall and roof modules have been described above under the titles Conduit connections: Roof with External Wall y Conduit Connections: Roof With Internal Wall. Fig. 38 shows an example of the welded union between wall and roof. Fig. 39 shows an example of structural union welded between walls at an angle.

### Structural unions between two roof modules.

The structural unions between two roof modules that are set upon internal walls that support their weight were previously described in Fig. 11 when describing the electric connection when joining an interior wall and roof modules at the same level, and also with Fig. 12 when describing the electric connection when joining two roof panels supported by an interior wall.

Fig. 36 shows the union of roof modules that use a structural beam (sheet metal "U" beam) in order to perform the union of same without the presence of a supporting wall. This type of unions are used when the total length of the roof module is not enough to cover the whole length of the building's roof and an intermediate beam is needed to hold the union of two roof modules. Fig. 37 is a side view that shows the union of roof modules at the same level as the structural beam.

### Finishing unions

Once all modules are joined through structural unions, the next step is to water-proof the unions by means of the application of polyurea or any other material that fulfills the function of sealing and water proofing the unions. Then the union's aesthetic finish is done by means of metal sheet mouldings that are held in place through screws, bolts, rivets, or by some adhesive bonding material, or applied by means of pressure through the embedding with the frame, or simply applying a covering layer over the structural union , usually of the same material as the modules covering layer.

It is also possible to apply mouldings and to the cover them with the same material as the exterior walls- This type or unions are called finishing unions.

### Finishing unions between two angled exterior wall modules

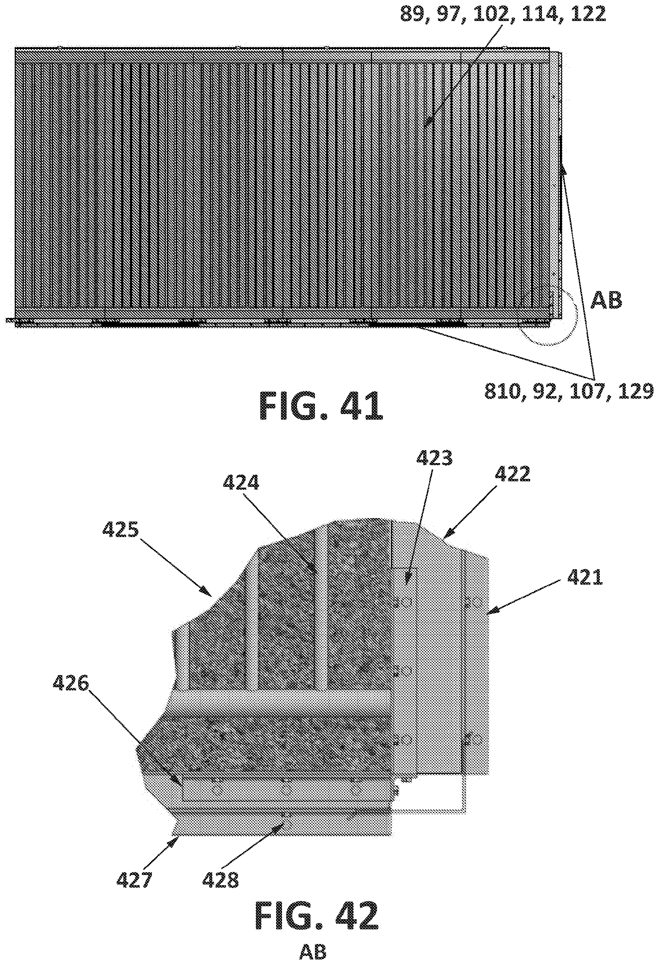

The angles exterior unions are made adhering a moulding to the frames of both walls, being that mouldilng later covered in a similar way to the wall's finish, especially the finish of the outward side (if different to the finish of the inside side) as shown in Fig. 42.

The moulding may be of sheet metal or of any other material that may fulfill the purpose o efficiently covering and protecting the structural unions. Fig. 41 is an upper view of the union between roof and wall modules.

Fig. 42 is a detail of AB of Fig. 41, showing an upper view of the finish of the corner moulding

Other way of manufacturing the wall-wall finish, being both walls at an angle, is putting the sheet metal or similar material moulding as shown in Fig. 42, and then fill the cavity thus generated by the moulding with the same material as the one forming the walls' outer layer, and withdrawing the moulding once this material has set. In this way it is obtained a finish made of the same material as the wall's external covering layer (if same is different from the internal covering layer).

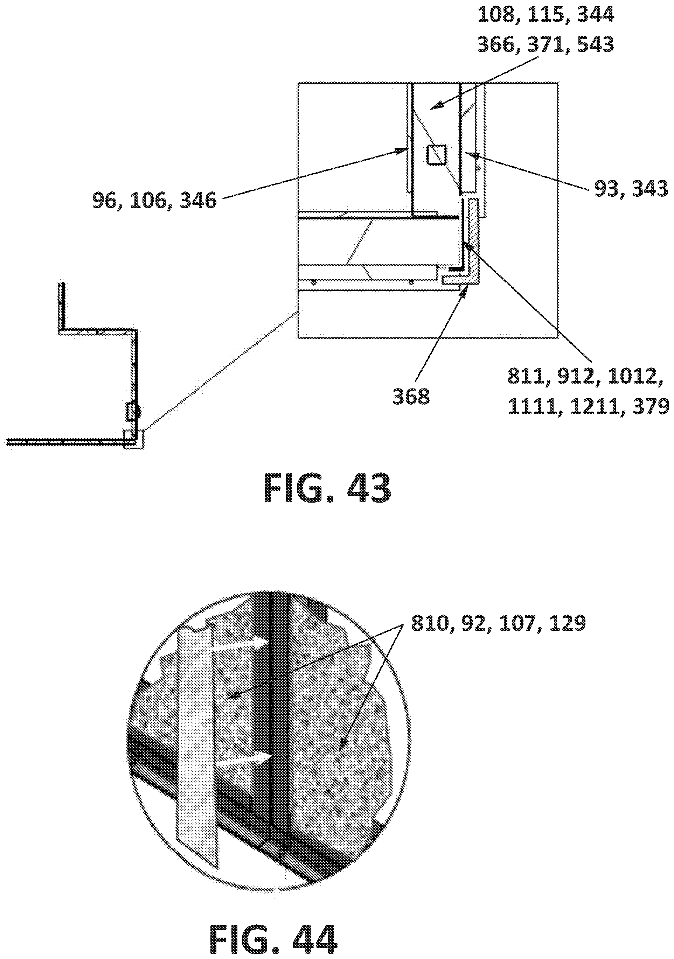

Yet another option for finishing angled walls is to overlap the modules as shown in Fig. 43, that is an upper view of two angled walls modules union.

### Finish of the flat wall to wall union.

The flat unions are finished by covering the already finished and water-proofed union with polyurea or similar water-proofing material, thus providing the same type of finish as the wall's external layer. Fig. 44 shows the outline of the finishing union for unions between wall modules.

### Union of the finishing layers when the external covering layer is cement or cementitious material

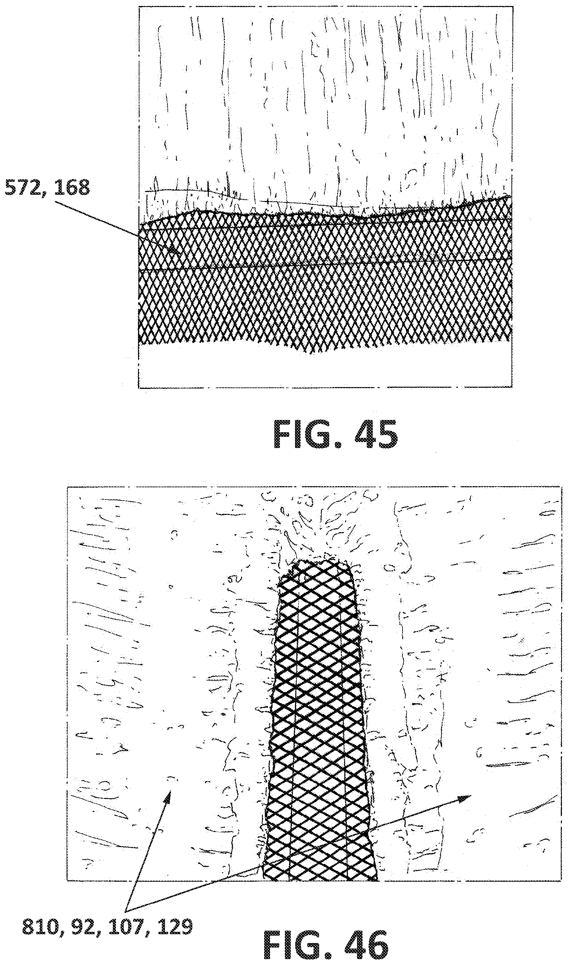

In walls where the external layer is cement or cementitious material, the finishing unions may be done with cement. For this reason, at the time of fixing the wire mesh as shown in Fig.27, the mesh is allowed to protrude over and beyond the exterior frame as shown in Fig. 45. Then, upon joining both wall modules, this excess mesh overlaps with the excess mesh of the adjacent wall module, and both excess meshes are fixed to both external frames by means of screws, bolts, welding, rivets, etc. In this way, the wire mesh, besides serving what in this step is its specific purpose, adds considerable structural strength since each mesh is anchored not only to its own frame but to the adjacent frame.

Once the wire mesh is fixed, the union is water-proofed with polyurea or similar material and then covered with a cement layer as shown in Fig. 46, same showing a finish union of two wall modules.

As described above, in Fig. 45 the fixed excess wire mesh may be seen after the cement covering layer has been applied.

### Union of finishing layers between roof-wall and roof-roof modules

The finishing layers union for roof and wall and roof and roof modules may be done by means of mouldings that are screwed to both module's external frames or directly by a covering layer of the same material as the covering layer of either the roof modules or the wall module.

The finishing union is done after the water-proofing of the structural union with polyurea or similar material. Exterior finishing unions with moulding are shown in:
Fig. 7 - Moulding for covering exterior electric connections, item Nº 811
Fig. 8 - Union of exterior wall and roof module without eave (option 1), item Nº811
Fig. 9 - Union of exterior wall and roof with parapet, item Nº 912
Fig. 10 - Union of exterior wall and roof with eave, item Nº 1012
Fig. 11 shows an electric connection in the case roof modules are connected at the level -and being supported by- an internal wall, at the same level of upper edge of same. Over the wall's exterior frame (Nº 112) a sheet of metal or otherwise useful material in an "Omega" shape (Nº 113) is used, same acting as support of the roof modules (Nº 114). This "Omega" sheet is fixed to the wall's external frame by means of attachment elements as screws , bolts, etc. The roof modules are joined to the Omega sheet plate by means of attachment elements - Item (1110)
**Fig. 12** - electric connection in the case roof modules are connected at the level -and being supported by- an internal wall, above upper edge of same, **item** Nº1211 **is the moulding** Exterior mouldings may be substituted by a kind of finish made of the same material as the modules external layer, if that is required.

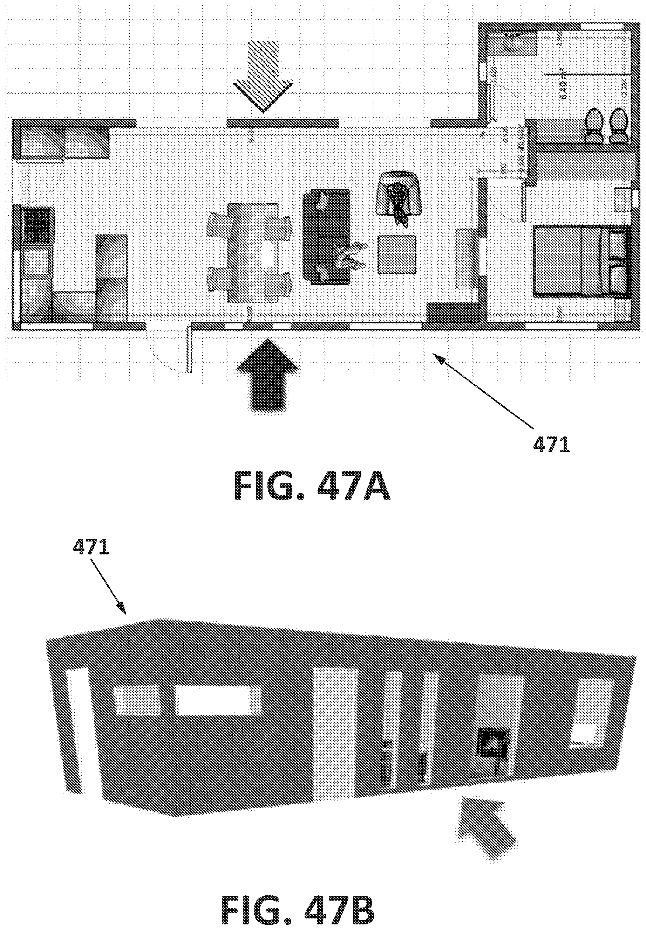

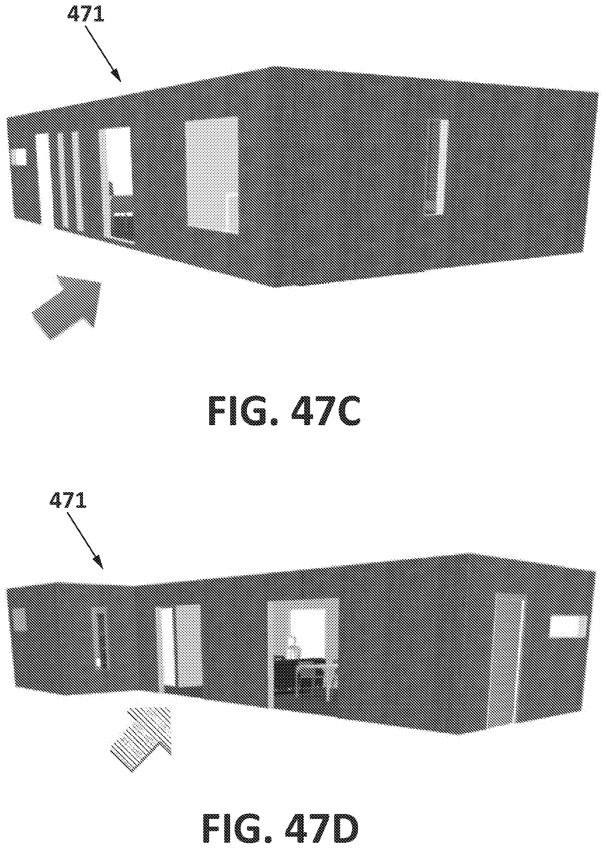

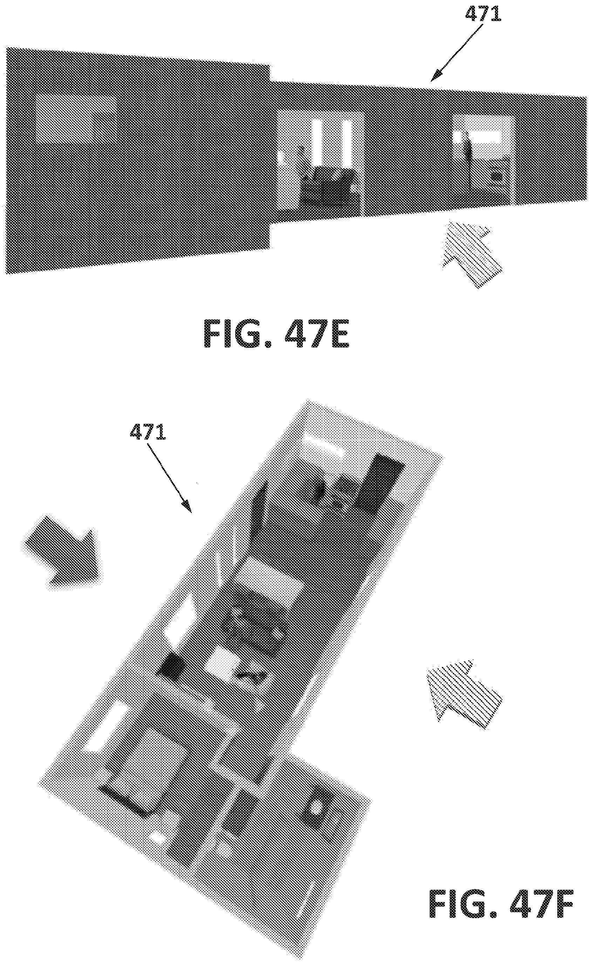

What is shown in Figs. 47A and 47B is an example of a prototype house Nº 471, having one bedroom a one bathroom, (the clear arrow shows the rear view and the bold arrow the forward view). Figure 47A shows the outline of said house from above. The figures 47B-47F show different perspectives of the house's outline shown in Fig 47A.

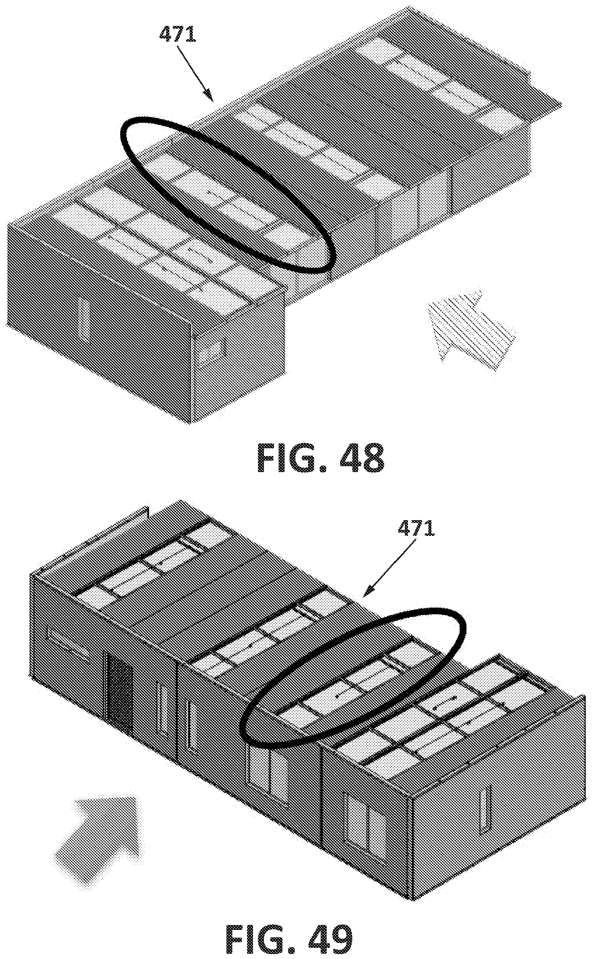

Figures 48 and 49 show in detail the conduits for the electrical service to be installed inside the roof panels.

The roof's dark layer represents the modules external face, that may be of diverse materials, amongst them: polyurea, cement, MDF, OSB, various types of agglomerates, gypsum, undulated metal sheets, flat metal sheets, cementitiuous panels, various resins, diverse tiles or panels, combined tiles (imitation marble or not) with resins and ground minerals (imitation marble or not), tiles of stone (marble and others), etc. In this example we will use polyurea as the external layer and gypsum as the internal (that is, towards the inside of the house) one.

The panel marked with the bold circle in Fig. 48 is shown with the external polyurea layer hidden for illustrative purposes, so as to show the conduits for the electrical services in the interior of the roof module (the same has been done with other roof modules that do not have the dark covering layer).

Figure 48 shows the perspective with conduits detail in the roof, as seen from behind the building.

Figure 49 shows the perspective with conduits detail in the roof, as seen from the front of the building

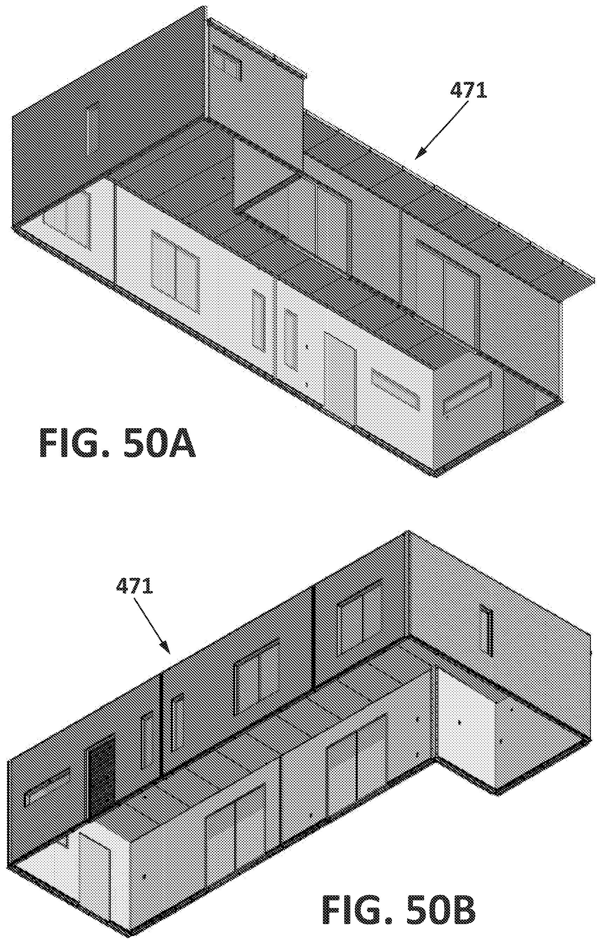

Figures 50A-50B show the project's perspective view without the floor and showing the various wall modules to be manufactured and assembled.

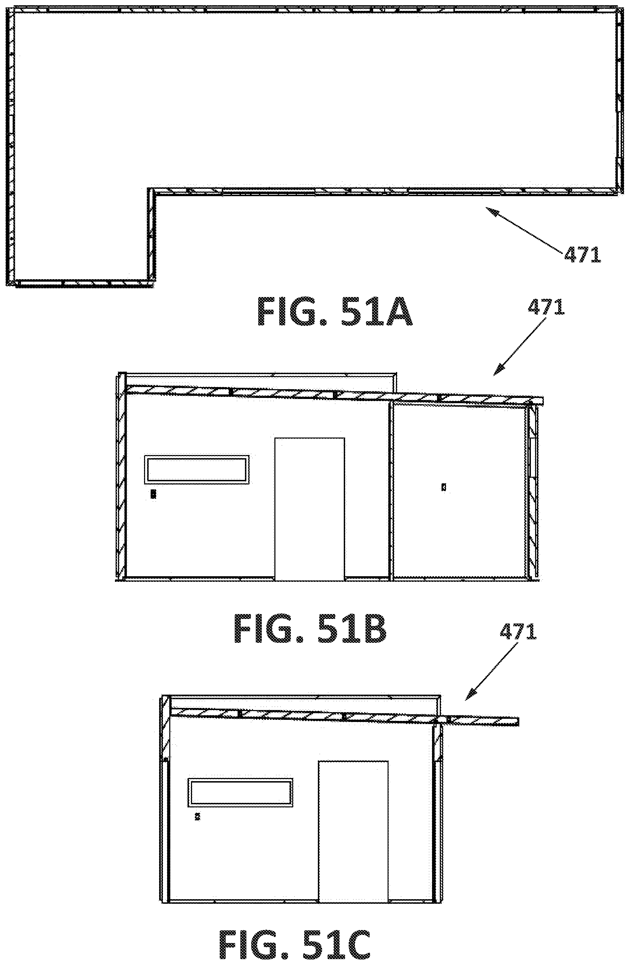

Figures 51A-51C show a view from above and different cutaway drawings show different views of said house.

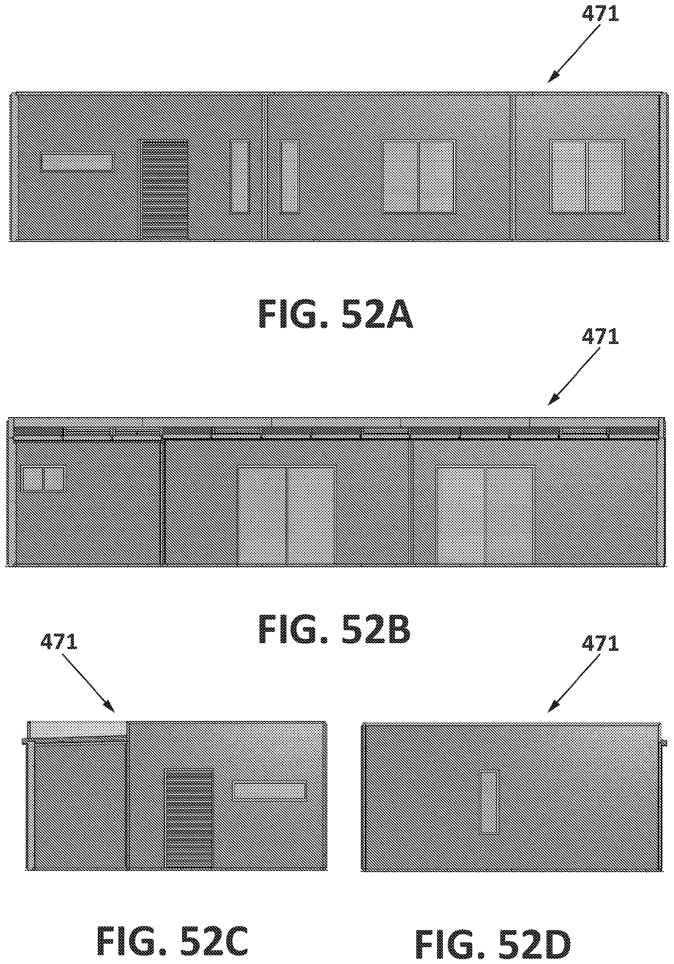

Figures 52A-52D show views of the fagade: figure 52A is a frontal view, Fig. 52B is a view from behind , Fig. 52C is a view from the right side and Fig. 52D is a side view from the left side.

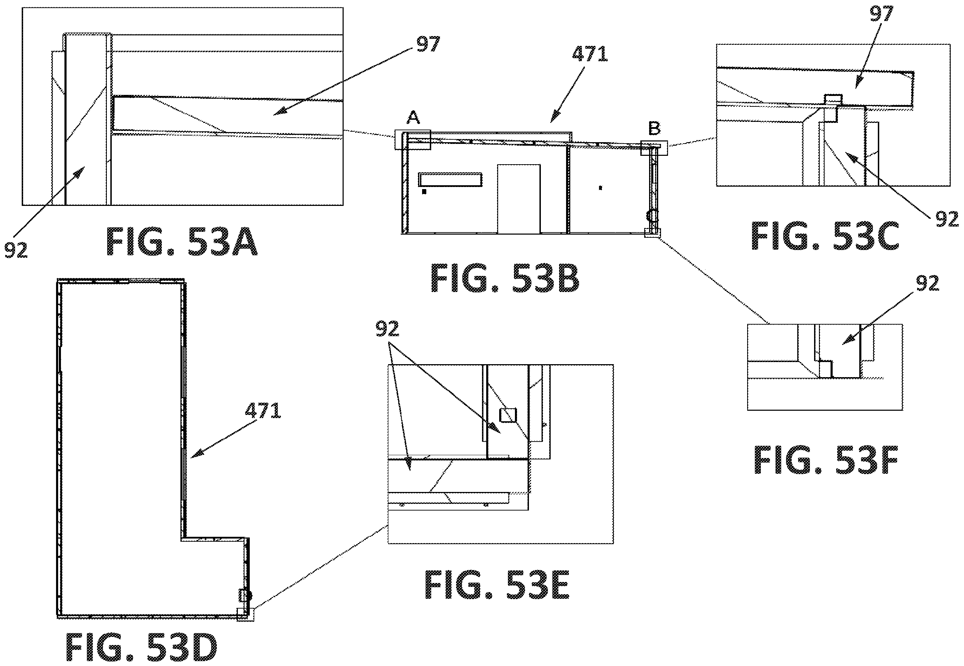

Figures 53A-53F show details of unions between modules of said house 471, with item numbers as shown in the list below.
Fig. 53A shows the union between the external wall and the roof with parapet.
Fig. 53B shows the union between external wall and the roof with eaves.
Fig. 53E is a cutaway view as seen from above, showing the union of angled wall modules with the modules superimposed
Figure 53F shows a service duct or cavity.

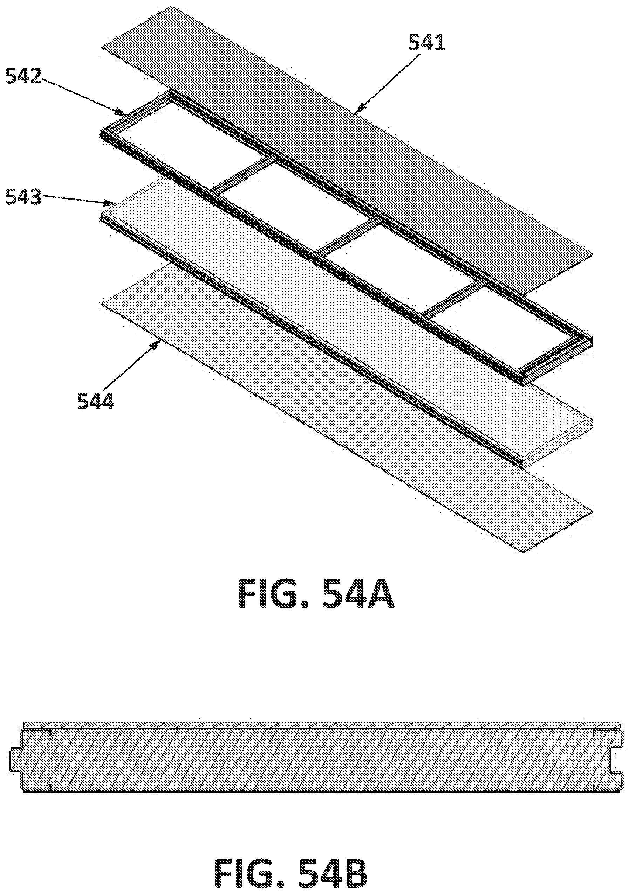

Figure 54A shows an exploded view of a module where the different components of same may be seen: polyurea layer (Nº 541), resistant structure (Nº 542), polyurethane nucleus (Nº 543), and gypsum layer (Nº 544).
Some of the materials that may be used in the exterior and/or interior wall panels or layers are: polyurea, cement, cementitious materials, MDF, Gypsum, OSB, diverse agglomerates, undulated metal sheet, flat metal sheet, various resins, combined panels of resins and ground minerals (either marble imitation or not), stone panels (marble or others), solar panels (especially in roof external panel), etc.
Fig. 54B shows a cross section of a module of this invention, with both side panels of unequal thickness.

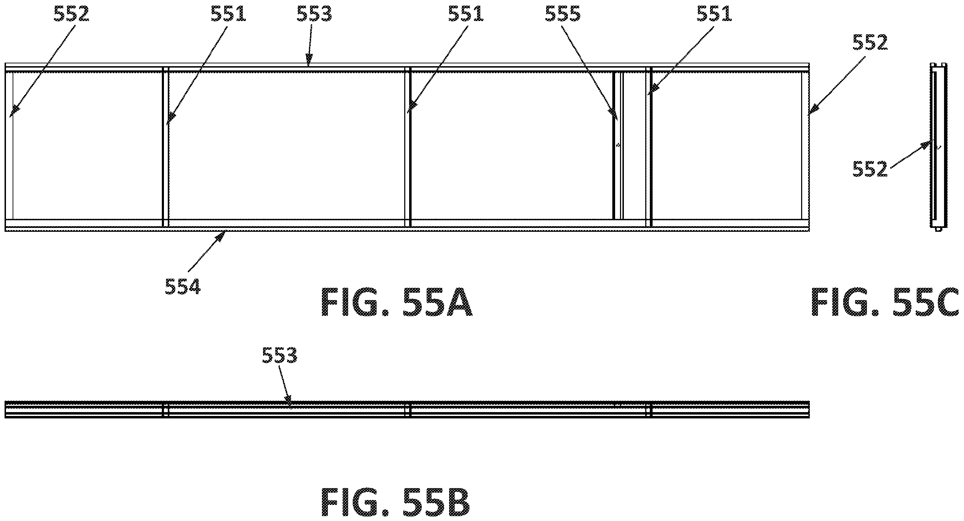

Figures 55A - 55E show views of the most resistant parts of the structure.
Figures 55A - 55C show the front elevation, upper view and side view of the frame structure.

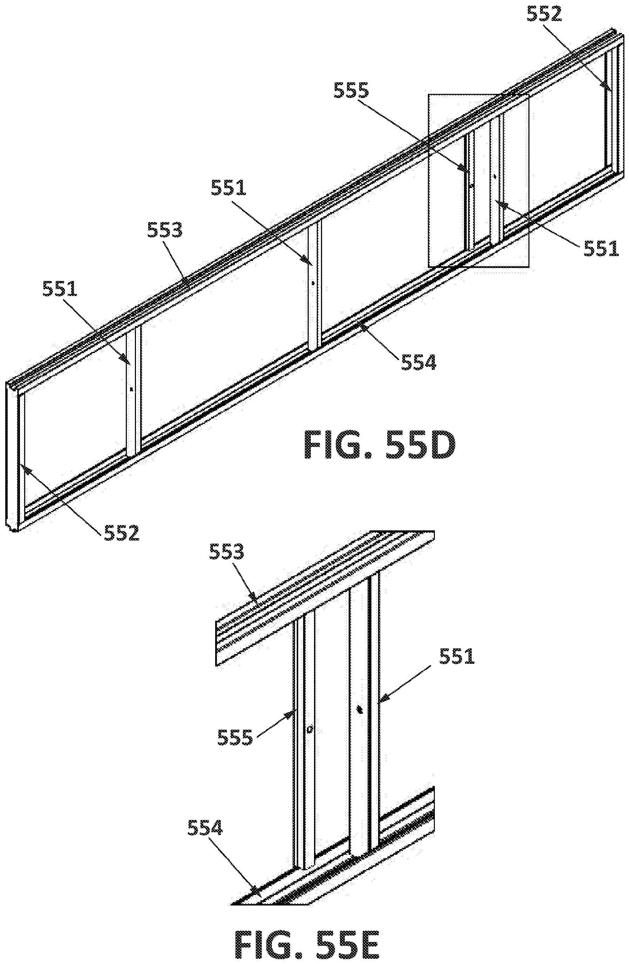

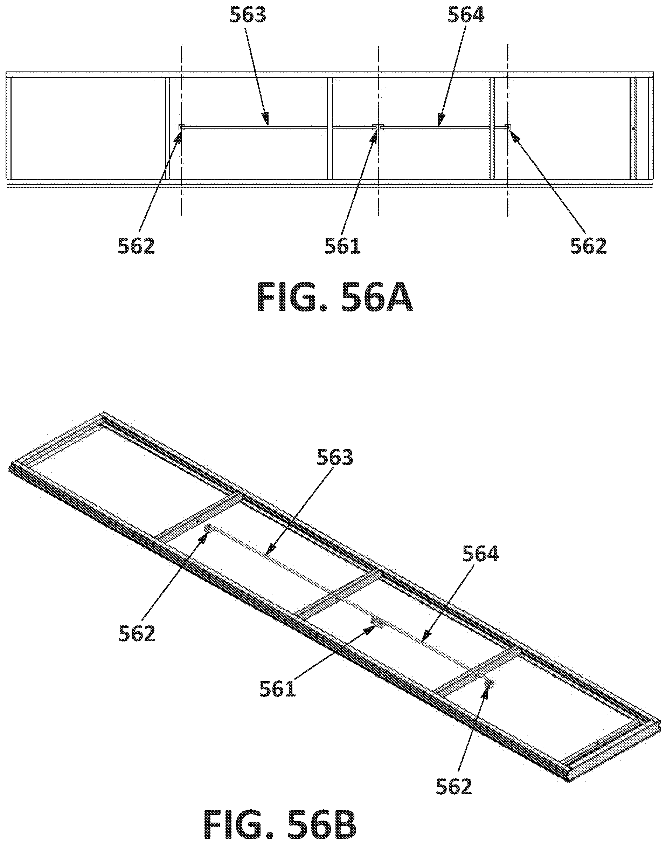

Fig. 55D is a view in perspective of the frame structure.
Fig. 55E is the detail indicated in Fig. 55D.
Fig. 55E shows the Omega "U" sheet metal for conduit connection between roof and wall modules.
Item 101 in Fig. 10 shows the union between an external wall and a roof with eave.

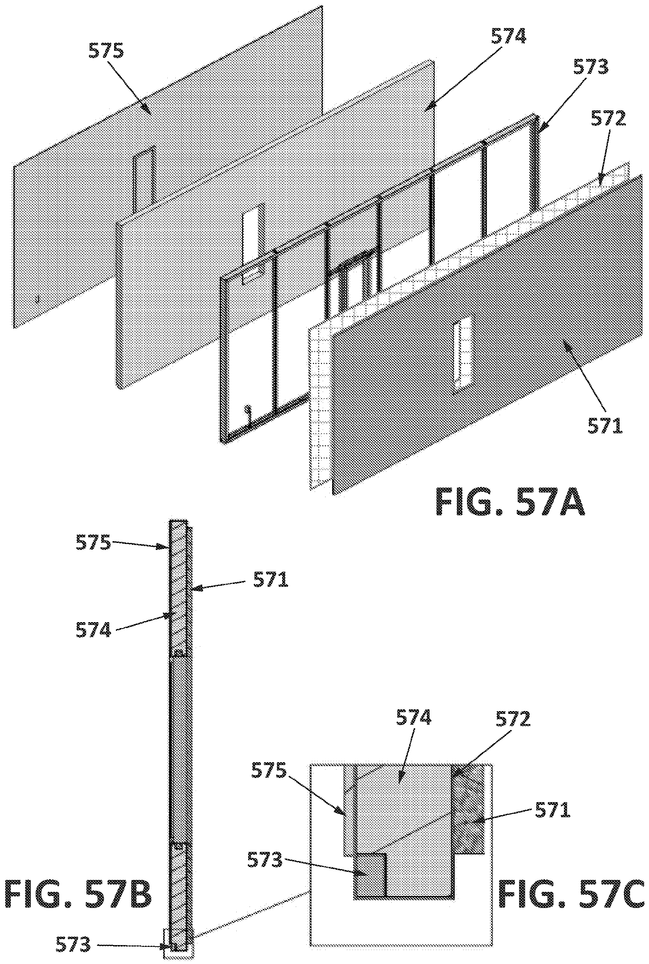

Fig. 57A shows an exploded view of a module, where the components may be seen as follows:
571 - cement covering layer
572 - wire mesh
573 - frame
574 - polyurethane nucleus
575 - gypsum panel

Some of the materials that may be used on the exterior and interior panels are: polyurea, cement, MDF, gypsum, OSB, plywood, various types of agglomerates, undulated metal sheet, flat metal sheet, cementitious materials, various resins, panels of combined materials (marble appearance or not) made of resins and ground minerals, stone such as marble and others, and solar panels on the external side. This list is not exhaustive and other materials, as for example wood in half (longitudinally cut) logs, boards, etc., may be used upon request.
Fig. 57B shows a cross section of a module according to this invention.
Fig. 57C is the B detail of Fig. 57B.

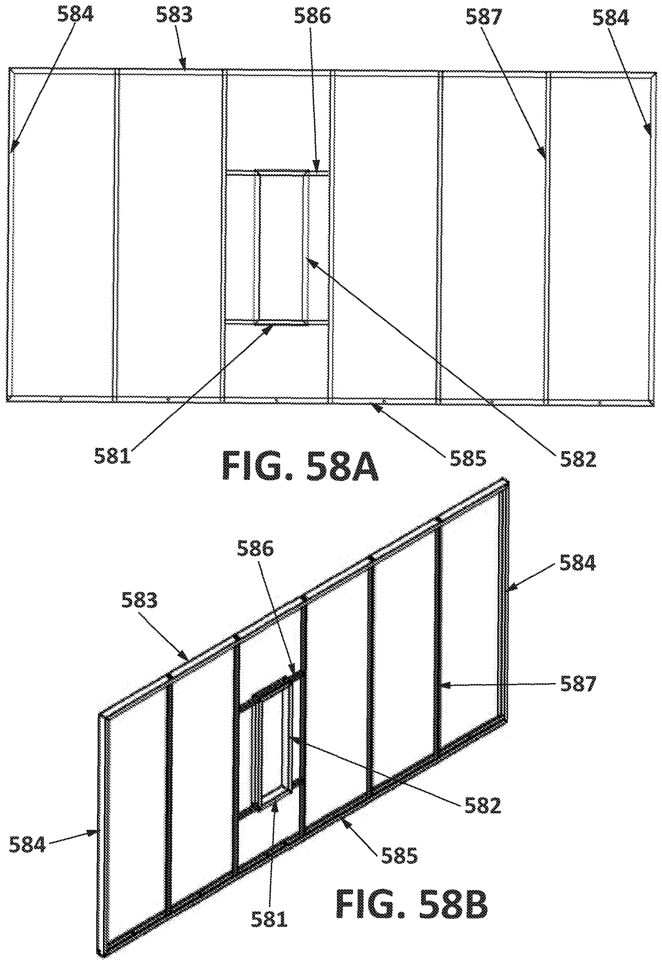

Figs. 58A - 58B show a frontal view and a view in perspective of a wall module that includes a window.

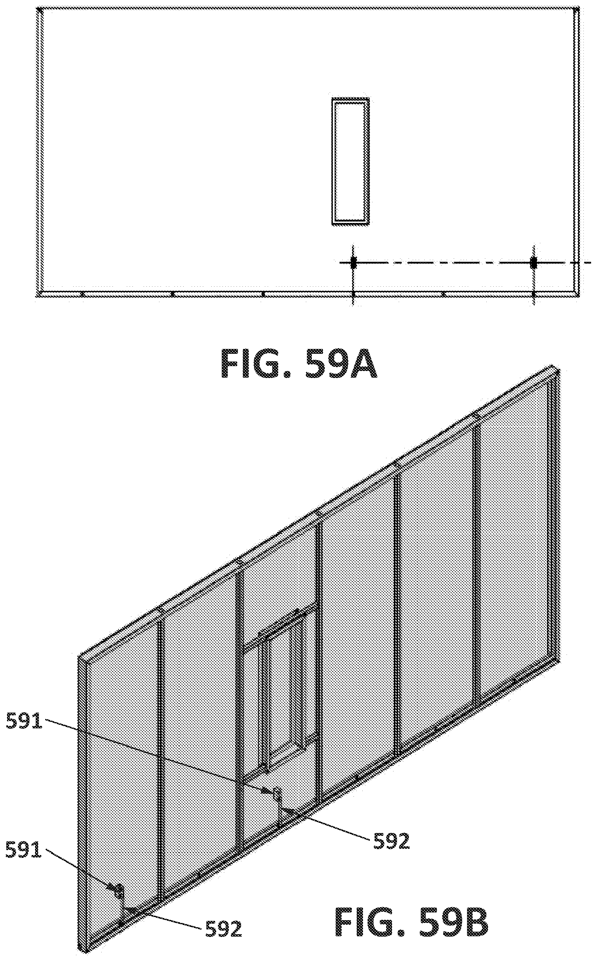

Figs. 59A - 59B show a frontal view and a view in perspective of a wall module that includes a window and two electric outlets.
Figs. 59A - 59B show a frontal view and a view in perspective of a module that includes a window and electric outlets.
Figs. 59A-59B show a frontal view and a view in perspective of a module including a window and wiring.

### Figures reference number list.

1- roof
2 - wall
3 - floor
4 - structural profile, structural reinforcements
5 - openings, internal frame
5' - window
6, 7, 8 electrical installation
6 - pipe
7 - conection box
8 - corrugated tube
9 - baseboard (skirting)
51 - orifice in external frame, for service communication through the skirting
52 - duct for wiring or piping, as for example sanitary installation
71 - empty space, cavity
81 - polyurethane nucleus
82 - covering layer
83 services conduit
84 wiring
85 water-proofing with polyurea
86 interior finish moulding
87 exterior frame
88 fastening angle
89 roof module
810 exterior wall module
811 - exterior finish moulding
91 - folded metal sheet for lock-in cover support in wall
92 - wall panel
93 - wall exterior covering layer
94 - interior conduit for services
95 - interior moulding cover for conduits
96 - interior wall cover
97 - roof module
98 - polyurethane nucleus
99 - exterior frame
910 - roof-wall modules fastening angle
911 - water proofing with polyurea
912 - exterior finish moulding
101 - roof services connection box
102 - roof module
103 - exterior roof cover
104 - interior conduit for roof services
105 -interior cover moulding for conduits
106 - interior wall covering
107- wall module
108 - polyurethane nucleus
109 - external frame
1010 - wall-roof fastening angle
1011 - polyurea water-proofing
1012 - exterior moulding for connection finish
111- polyurea water -proofing
112- external frame
113 - Omega sheet metal for module support
114 - roof module
115 - internal polyurethane nucleus
116 - services wiring
117 - services internal conduit
118 - moulding for internal finish
119 - covering layer
1110 - module fixing screws
1111 - exterior finish moulding
121 - external frame
122 - roof module
123 - polyurea water-proofing
124 - services internal conduit
125 - external covering moulding for conduits
126 - sheet angle for fastening wall-roof external frames
127 - covering layer
128 - internal finish moulding
129 - wall module
1210 - roof/wall services wiring
1211 - exterior finish moulding
131 - bricks, stones and similar elements
141 - rigid interior nucleus
142 - cement layer on wire mesh
143 - external frame
144 - structural joint
145 - cavity to be covered by mouldings and that connects roof and wall services
146 - cement layer
147 - ceramic cover layer
148 - electric services
149 - cover layer with panel
149' - cover layer with panel
150 - wire mesh
161- sheet profile
162 - sheet profile
163 - tube
164 - expanded polyurethane
165 - polyurea
166 - gypsum
167 - cementitious finish
168 - fixing mesh, either metallic or plastic (or other)
169 - solar collector
1610 - corrugated tube
171 - brick block or stones
172 - prefabricated panel
173 - mould
191 - structure of module to be manufactured
192 - main structure mould than can be disassembled
193 - hinges for disassembling mould
194 - structural reinforcements for mould lid
195 - metallic plate with orifices for polyurethane injection
201 - mould frame
202 - mould lid structural reinforcement
203 - sliding lid
204 - mould's back part or back lid structural reinforcement 221
222 - mould's external frame
223 - orifices in external frame for conduit passage
224 - mould's lid
241 - conduit for electrical wires
242 - external frame
243 - mould
251 - electrical wiring
311 - ceramic cover
331 - metallic angles for anchoring to the floor (cement platform)
341- floor
342- "U" sheet metal for wall fixing
343 - external covering /layer
344 - polyurethane nucleus
345 - fixing screw
346 - internal covering/layer
347 - external frame
351- wall module
352 - water-proofing with polyurea
353 - fixing to external frame through-bolt
354 - external frame fixing welding
361- wall module
362 - water-proofing with polyurea
363 - fixing to external frame through-bolt
364 - external frame
365 -joint metal plate
366 - internal nucleus
367 - covering layer
368 - exterior finish union
369 - interior finish union
371 - polyurethane nucleus
372 - external frame
373 - water-proofing with polyurea
374 - Omega sheet metal for module support
375 - union structural beam
376 - finish union
377 - fixing screws
378 - covering layer
379 - moulding for external finish connection
381 - welded structural union
421 - fixing angle between external wall and floor
422 - wall module external frame
423 - fixing angle between wall and roof modules
424 - tubes for heat exchange fluid circuit
425 - roof module
426 - fixing angle for wall-roof external frames
427 - fixing angle for wall and floor
428 - fixing screw
471 - house or dwelling
541 - polyurea layer
542 - structure
543 - polyurethane nucleus
544 - gypsum panel
551 - metal sheet profile
552 - lateral "U" metal sheet profile
553 - female "U" metal sheet profile
554 - male "U" metal sheet profile
555 - omega
561 - connection (junction) box
562 - light box
563 - corrugated tube
564 - corrugated tube
571 - cement layer
572 - fixing wire mesh (metallic, plastic, or otherwise)
573 - structure PP-01
574 - polyurethane
575 - gypsum layer or panel
581 -"U" metal sheet profile
582 - "U" metal sheet profile
583 - "U" exterior metal sheet profile
584 - "U" exterior metal sheet profile
585 - "U" exterior metal sheet profile
586 - metal sheet profile
587 - metal sheet profile
591 - connection (junction) box
592 - corrugated tube

## Claims

1. A method for manufacturing walls **characterized in that** the walls are custom-made according to the necessities and factory facilities, with a reticular structure, internal beams (4) (metal sheet profiles) and internal frames (5) inside the wall, all encompassed by a periphery frame (87, 99, 109, 112, 121, 242, 347, 364, 372) that is put inside a mould (173, 243) that resists considerable pressures and inside which polyurethane or a similar material is injected, expands and sets, said polyurethane forming a thermal and acoustic insulation nucleus that also provides mechanical strength, having inside the volume contained inside the frame that was put in the mould (173, 243) all the services, such as electrical, water, air conditioning, sanitary in general, ducts, drainpipes and other conduits that may be required, where besides the mesh, which may be metallic, plastic, synthetic or natural fiber or otherwise, bonded to the polyurethane nucleus or to the periphery frame (87, 99, 109, 112, 121, 242, 347, 364, 372) that demarcates the wall, characterized also by a polyurea layer or hydrophobic membrane and by staples, screws, rivets, etc., that bond the mesh either to the polyurethane nucleus or to the wall frame, where over that mesh thus fixed it is possible to project an exterior and/or internal covering layer of cement, gypsum or any other material projectable by airgun or similar method, or instead (or in addition) to the projected layer, custom-made panels may be applied to the wall on the exterior and/or the interior side (facing the inside of the building), and where the cover layer and/or the panels may all be applied inside the mould (173, 243), from where the multilayered wall comes out perfectly finished, and where inside said mould (173, 243) polyurethane has been injected through several strategically placed orifices that perforate the mould's external lid (173, 243) and also perforate the panel applied inside said mould, so that the polyurethane, sets inside same (173,243) and forms a mechanically resistant nucleus that provides, besides mechanical strength, thermal and acoustic insulation and bonding strength between the diverse layers and internal elements and services, where in the case of using bricks or similar blocks instead of one or both lateral panels, these bricks or blocks are put first on the mould's bottom (173, 243), where the very same polyurethane (or similar material) expanding under pressure seeps between the blocks, and upon setting acts as a bonding agent not only between bricks or blocks but also amongst the wall's different layers and services inside, all without the need of an additional application of cement or any other bonding agent, thus coming the wall out of the mould (173, 243) already finished and with its internal and external layers or panels, or bricks, ceramics, blocks or stones, said wall being perfectly water-proofed in the unions of its panels and other parts with polyurea or a similar material, which additionally also provides structural strength and load bearing capacity, thus producing a light wall that on sight and tact is indistinguishable from a traditional construction, but at a cost and building time substantially less than current methods and with a considerable structural strength and services included inside, thermal and acoustic insulation, and able to take an infinite variety or internal and external layers and finishes, be them applied inside or outside the mould (173, 243) where the polyurethane is injected.

2. Method for manufacturing walls **characterized in that** the mechanical strength of the insulating element is in addition to that provided by the wall's other components, containing inside the volume defined by the wall's frame all the services as required: air conditioning, electrical wiring, sanitary pipes in general, water, ducts, drainpipes, an others that may be requested by the customer.

3. The manufacturing method as described in claims 1 and/or 2, where the mesh (usually, but not always, a wire mesh, 168, 572) that holds in place the cement or similar material when recently applied, besides being able to be fixed to the wall's frame by means of staples, screws, rivets, etc., or bonded with polyurea or similar material to the polyurethane's nucleus, may also include the application of a mesh (usually wire mesh) on the inside, on the outside, or in both sides; understanding by inside the side facing the inside part of the building, and outside the one facing the elements.

4. The manufacturing method as described in any of the claims 1-3, or part of it, where both the internal and/or external wire meshes (168, 572) and the panels or internal and external finish layers may be applied to the wall after same has been taken out of the mould.

5. The manufacturing method as described in any of the claims 1-4, where the external and or internal layers are formed by bricks of various designs, stones or similar elements including standard bricks, may be applied inside or outside the mould (173, 243), being that when they are applied inside the mould the polyurethane's pressure upon expanding seeps in between the bricks or blocks, providing the bond between them and also with the wall's other elements, thus providing a multilayer wall with thermal and acoustic insulation and additional structural rigidity, where one of these brick layers, or both if it is done on the inside and the outside is a standard brick wall but with an multilayer wall placed against it or between it if there are two brick or block layers, thus providing a prefabricated wall that is the conjunction of a traditional structure and a light structure with a modern thermo-acoustic insulation layer, with the additional aspect of having in its depth all the custom required services: electrical, sanitary, water, ventilation, draining, etc.

6. The method according to claims 1-5, configured in order to be used to manufacture a roof module, where on the manufacturing mould's bottom (173, 243) a layer of tiles made of any material and design has been laid and thus bonded by the expanding polyurethane.

7. A roof module made by the method described in claims 1-6, where on the manufacturing mould's bottom (173, 243) a panel made of water-proof and ultra-violet ray resistant material (so as to avoid solar ray degradation) has been laid down, where water-proof unions or junctures between adjacent roof modules are reinforced with polyurea or similar material also ultra violet ray resistant, being that said polyurea adds additional structural strength to the roof, since it rigidly joins together the different roof modules.

8. A prefabricated roof module according to either or all of claims 1-7, where on the bottom of the manufacturing mould (173, 243)(which will be the roof's upper face) a solar heating panel has been laid down (face down) and connected to the pertinent service pipes contained inside the frame and that will be covered by and included in the polyurethane nucleus upon its expansion and setting.

9. A prefabricated roof module made according to either or all of claims 1-8 where in the manufacturing mould (173, 243) and attached to either the external frame of the reinforcing beams or sheet metal, a custom made internal frame has been fixed so as to provide a "window" in order to let a specific and custom-made duct go through the roof, be it for ventilation, heating/air conditioning, chimney, or any other useful conduit, when the juncture of said duct and said frame and panels is water-proofed by polyurea or a similar material treated so as to resist ultraviolet ray degradation.

10. A prefabricated custom made wall manufactured off site that includes, from the outside towards the construction's inner side, by:
a) exterior panel
b) external fixing mesh
c) polyurethane nucleus (81, 98, 108, 115, 344, 366, 371, 543) or similar inside a periphery frame with internal frames for doors, windows, etc., and where the service conduits are included in the polyurethane nucleus
d) internal fixing mesh
e) internal panel
Where the indispensable minimum manufactured at the production plant is c), being possible to leave the wall at that, with a coarse finish as for industrial purposes, and where the interior layer (or panel) and very especially the exterior layer (or panel) may be formed by a brick (or stones or blocks) wall that has as a bonding agent the same polyurethane that forms the central rigid nucleus and that is the thermal /acoustic insulation, which upon expansion has seeped in between the bricks (or blocks or stones) and bonded them together and to the polyurethane's nucleus and metal (or wood or otherwise) frame.

11. A prefabricated custom made wall manufactured off site, **characterized in that** it is formed only by two external rigid resin layers as polyurea or similar material, or any other water-repelling layer, be it plastic, synthetic, mineral or similar, and a polyurethane or similar material thermo/acoustic insulation layer or nucleus (81, 98, 108, 115, 344, 366, 371, 543), contained between the rigid resin or similar material water-repelling layers, that polyurethane nucleus having inside (if desired) the service conduits, reinforcing frames and inner frames for openings, said wall providing additional rigidity and load bearing capacity.

12. A prefabricated wall according to the method described in claims 1-6, **characterized in that** said wall is surrounded and contained by a periphery rigid frame (metallic or otherwise), where said wall has been formed and set in a mould (173,243) formed by a frame that includes a metallic outer frame (or other rigid material) that forms its contour and to which the mould's doors are attached, being that the wall's frame and the mould's frame (173, 243) form an internal frame and an external frame.

13. A prefabricated wall according to the method described in claims 1-6, **characterized in that** said wall contains conduits inside its skirting board or baseboard (9) or along the wall's upper part, be it along its internal edge or its external edge, as shown in the descriptive memory, or even inside the roof module(s).

14. A prefabricated wall or roof module according to the method described in claims 1-6, **characterized in that** the unions of the diverse conduits, pipes, wires that go through the roof and/or through the walls are done in an either internal or external way with respect to the wall or to the roof, through ducts (52) or cavities formed inside the wall or roof, or both, and by means of threading, welding, micro-welding, microfusion, lock-in, pressure assembly, or by any other means.

15. A prefabricated wall or roof module according to the method described in claims 1-5, that additionally, when it is desired to obtain a construction with the roof (1) finished at a square angle with the wall (2), without the existence of an eave or a parapet, same is made with the junction of the roof conduits with the wall conduits through a cavity or enlarged conduit in the roof's extreme where same joins the wall, and a similar cavity on the upper end of the vertical wall's conduit, so that the roof's enlarged conduit or cavity rests just above the wall's enlarged cavity, thus forming a kind of duct, and where an angled detachable moulding shuts the duct thus formed by both enlargements from the side of the interior wall-roof angle, being this moulding perfectly water-proofed and applied on the internal side panel, on the polyurethane nucleus, on the roof and or wall frames, or on any other part of wall and roof, thus ensuring total water tightness and at the same time access to the duct if necessary.

16. A prefabricated wall or roof module according to the method described in claims 1-6, that additionally, when it is desired to build a construction with the wall (2) projecting over the roof (1), that's to say forming a parapet, the conduit union between wall conduit and roof conduit is made by means of a cavity or enlarged conduit in the roof's end, just where same joins the wall , and a similar enlargement in the internal side of the vertical wall's conduit, so that the roof's enlarged conduit is just by the side of the wall's enlarged conduit, thus forming a kind of duct where an angled detachable moulding shuts the duct thus formed by both enlargements from the interior side of wall-roof angle, being that moulding perfectly water-proofed and applied on the interior side panel, on the polyurethane nucleus , on the wall and/or roof frame, or on any other part of wall and roof, thus ensuring total water tightness and at the same time access to the duct if necessary.

17. The wall of claim 16, having the conduits union on the angle formed by the roof's upper part (1) and the wall (2).

18. A prefabricated wall or roof module according to the method described in claims 1-5, that additionally, when it is desired to obtain a construction with the roof (1) overhanging beyond the wall (2), that is forming an eave, the wall and roof conduits union is made by means of an enlarged cavity in the roof just where same joins the wall, and a similar cavity in the upper end of the wall's conduit, thus forming a kind of duct, where an angled detachable moulding shuts the duct thus formed by both enlargements, doing so from the internal side of the wall-roof angle, being that moulding perfectly water-proofed and applied on the interior side panel, on the polyurethane nucleus , on the wall and/or roof frame, or on any other part of wall and roof, thus ensuring total water tightness and at the same time access to the duct if necessary.

19. A prefabricated wall or roof module according to the method described in claims 1-5, that additionally, in order to externally connect the roof (1) and wall (2) conduits, the panels of both wall and roof may be fixed in such a way that the roof's part being directly supported by the wall does not cover the totality of same's thickness, but only up to the point where the wall's conduit appears, and in such a way that neither the wall or roof conduits need enlargements, since the space or cavity is externally limited by a detachable angled moulding that is perfectly water proofed, said moulding closing and delimiting the duct thus formed in such a way that a space through which to make the connections is formed, as well as passing the electrical wires or other conduits or pipes, with said space or duct covered by a sheet metal, polymer or other suitable material moulding.

20. A prefabricated wall or roof module according to the method described in claims 1-6, that additionally, when it is desired to obtain a construction with extra rigidity, load bearing capacity and general resistance, welding points are applied between adjacent module metallic frames (87, 99, 109, 112, 121, 242, 347, 364, 372) -be them wall, roof or their combinations- at optional distance, this being valid also for wall frames and "U" or "T" (or other shapes) metal sheet profiles or beams -when same are used- that anchor the wall to the cement platform that is the base for the whole construction.
